# EUROPEAN PATENT APPLICATION

(11) **EP 2 663 110 A1**
(43) Date of publication of application: **13.11.2013**
(21) Application number: 13159504.3
(22) Date of filing: 15.03.2013
(51) Int. Cl.: H04W 12/04, H04W 12/06

(54) **Near Field Communication Tag Data Management**

(30) Priority: 11.05.2012 US 201261646000 P
(71) Applicant: BlackBerry Limited, Waterloo, ON N2L 3W8 (CA)
(72) Inventor: Boucher, Antoine Gilles Joseph, Kitchener, Ontario N2P 2B3 (CA); Poulton, Barry James, Oakville, Ontario L6M 0A6 (CA); Neill, Brian Paul, Mississauga, Ontario L4W 0B5 (CA); Steele, Jay David, Bedford, Nova Scotia B4B 0G4 (CA); Johansen, Shaun R., Bedford, Nova Scotia B4B 0G4 (CA)
(74) Representative: Patel, Binesh

(57) **Abstract**

Systems, devices, methods, and programming products for enabling read/write operations between near field communication (NFC) devices at multiple levels of access authorization.

## Description

### Cross-Reference to Related Applications

This application claims the benefit of United States Provisional Patent Application No. 61/646,000, filed 11 May 2012 and entitled Device, System, and Method for Server-Provided Near Field Communication Tag Actions, the entire contents of which are hereby incorporated by this reference.

### Field of the Disclosure

This application relates to the field of communications, and more particularly, to mobile wireless communications devices and related methods that use Near Field Communications (NFC).

### Description of the Background

Mobile communication systems continue to grow in popularity and have become an integral part of both personal and business communications. Various mobile devices now incorporate Personal Digital Assistant (PDA) features, such as calendars, email, address books, Internet ("Web"), task lists, calculators, memo and writing programs, media players, games, etc. For example, these multi-function devices may allow users to send and receive electronic mail (email) messages wirelessly and access the internet 900 via a cellular and/or other telephone/voice network 8141, wireless wide area network (WWAN), and/or a wireless local area network (WLAN), for example.

Some mobile devices also incorporate contactless card reading technology, and/or Near Field Communication protocols, antenna, and/or chips to enable such contactless card reading technology. Near Field Communications (NFC) technology is may be used for contactless short-range communications based on radio frequency identification (RFID) standards. NFC uses magnetic field induction to enable communication between electronic devices, including mobile wireless communications devices, and to enable communications between devices and passive cards, tags, or the like. NFC communications are typically over short ranges, such as over distances of a few centimeters or less, and generally are high frequency in nature. These short-range communications can include payment and ticketing, electronic keys, identification, device set-up service and similar information sharing, by way of non-limiting example.

As stated above, NFC technologies can employ tags, cards, and the like that may be read from, and/or written to, by NFC-enabled mobile devices. Certain such tags capable of receiving a write from mobile devices may be reprogrammed. However, such tags may be subject to only limited reprograms, at least because the hardware included in such reprogrammable tags must be reprogrammed by a proximate device, and hence suffer some loss of function after repeated local reprogramming. Further, such reprogramming is inherently limited, at least in that the reprogramming in prior embodiments typically allows no greater functionality for the tag than the programming that is overwritten.

Additionally, although the proximity needed to read an NFC tag offers limited security in typical prior embodiments, more extensive security measures are lacking presently to allow more complex embodiments. This is particularly the case for reprogrammable tags, in part because a device attempting to reprogram a tag is necessarily proximate to the tag, and thus has overcome the most significant security measure offered by current NFC tags, namely the required proximity.

### BRIEF DESCRIPTION OF THE DRAWINGS

The accompanying drawings illustrate various aspects and exemplary embodiments of the devices, systems, and methods disclosed herein. In the drawings, like numerals represent like elements.

Figures 1A-1C provide schematic illustrations of coding schemes suitable for use in implementing various aspects and embodiments of the disclosure;

Figure 2 provides a schematic illustration of a stack architecture suitable for use implementing NFC processes in accordance with the disclosure;

Figure 3 provides a schematic illustration of an embodiment of a data set suitable for use in implementing NFC communication processes in accordance with the disclosure;

Figure 4 provides a schematic illustration of an embodiment of a communication system suitable for use in implementing aspects of the disclosure;

Figures 5 and 6 provide schematic diagrams of embodiments of stack architectures suitable for use in implementing aspects of the disclosure;

Figure 7 provides a schematic illustration of an embodiment of a communication system suitable for use in implementing aspects of the disclosure;

Figure 8 provides a schematic illustration of an embodiment of a communication system suitable for use in implementing aspects of the disclosure;

Figures 9 - 12 provide schematic illustrations of embodiments of communication systems suitable for use in implementing aspects of the disclosure;

Figure 13 illustrates embodiments of NFC capable tags in accordance with an exemplary embodiment of the present disclosure;

Figure 14A illustrates aspects of an NFC capable device in accordance with an exemplary embodiment of the present disclosure;

Figures 14B and 15A illustrates schematic flow diagrams of processes suitable for use in implementing the disclosure;

Figures 15B provides a schematic illustration of an embodiment of a communication system suitable for use in implementing aspects of the disclosure;

Figures 16 and 17 provide schematic diagrams illustrating signal exchanges between networked resource interconnections during execution of processes in accordance with the disclosure;

Figure 18 illustrates communication aspects involving NFC capable devices in accordance with an exemplary embodiment of the disclosure;

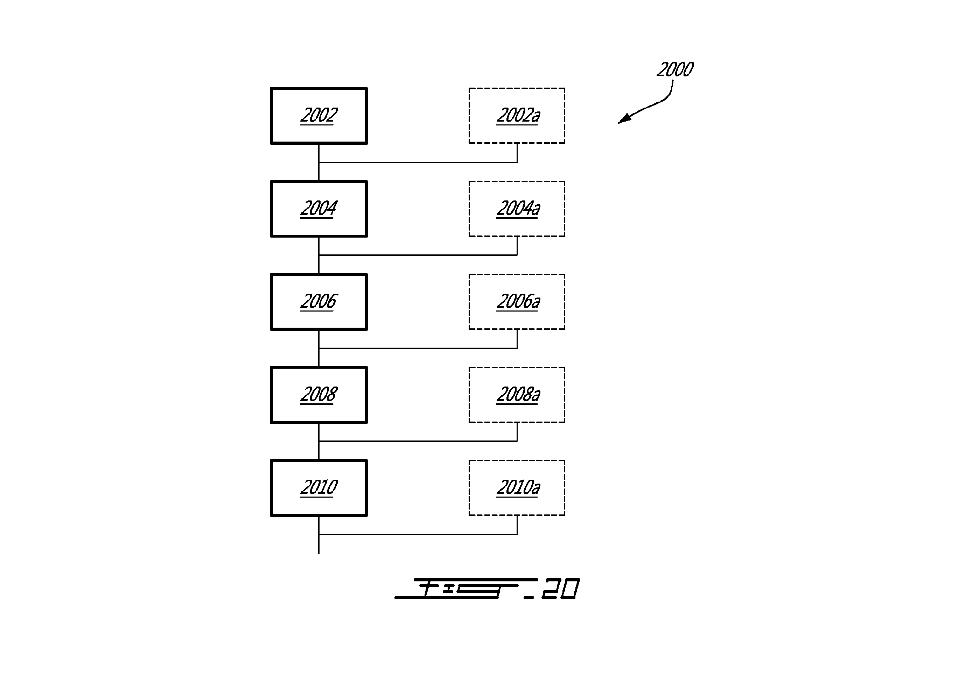

Figures 19-21 illustrate method steps suitable for us in implementing aspects of the disclosure; and

Figures 22 and 23 illustrate apparatus in accordance with an exemplary embodiment of the disclosure.

### DETAILED DESCRIPTION

In some aspects, the disclosure may provide systems, devices, methods, and programming products which may enable read/write operations between near field communication (NFC) devices at multiple levels of access authorization as well as the possibility of increased versatility and/or functionality. The various figures and descriptions herein may, in some instances, have been simplified to illustrate elements that are relevant for clear understanding, while eliminating, for the purposes of clarity and brevity, other elements found in typical communications processes. In such cases, those skilled in the relevant arts will recognize and understand any further elements and/or steps that may be desirable and/or required in implementing features or aspects of the disclosure. Because such elements and steps are well known in the art, and would not facilitate a better understanding of the present disclosure, in some cases they are not described, or are not fully described, herein. To be clear, however, the disclosure herein is directed to all variations and modifications to the disclosed elements and steps that would be known or apparent to those skilled in the relevant arts, in light of this disclosure.

Near Field Communications (NFC) include all short-range, bi-directional and/or other multi-directional communication technologies consistent with the purposes and embodiments disclosed herein.

Security for NFC transmissions can be provided in a wide variety of ways, including for example through the application of data encryption techniques; access authorization requirements (e.g., the use of user identification / password processes); and other methods. For example, NFC-capable devices, including tags and other passive devices, may include or otherwise enable implementation of software applications and/or code configured to require verification and/or other forms of authorization as a condition of successful inter-device NFC interactions. Such application(s) may, for example, be invoked when pre-defined type(s) of NFC interaction(s) are detected, and may verify that pairing device(s) or tag(s) are authorized and/or are otherwise of acceptable type.

For example, a user of an active NFC-capable mobile device may wish to ignore any undesirable or otherwise unauthorized interactions with other mobile devices, and may be enabled to selectively limit or prevent such interactions. Similarly, an NFC-capable device used for a specific purpose, such as for reading "smart" cards/tags, for example, may ignore requested interactions from any NFC-capable device that is not recognized as a smart card/tag. Additionally, in known embodiments, personal identification numbers (PINs) and/or other security keys may be exchanged between communications devices using, for example, NFC, as a condition of establishing a wireless communications connection.

A further aspect or layer of security can be provided by the relatively short distance NFC transmissions are effectively enabled to travel, and/or the relatively low power at which they may be transmitted. In such ways NFC communication characteristics may be used to limit or eliminate the ability of third-party devices to intercept NFC transmissions.

As those skilled in the relevant arts will appreciate, once they have been made familiar with this disclosure, NFC devices may be, or include, active devices, such as smart phones or other personal digital assistants (PDAs) comprising processors useful for initiating and otherwise conducting NFC interactions; passive devices, such as NFC-enabled cards or tags, which may be readable, under defined conditions, by one or more active NFC devices; and / or hybrid or combination active / passive devices incorporating some or all characteristics of both active and passive devices.

In many embodiments, NFC devices comprising internal power supply(ies) and processor(s) in addition to data storage device(s) are considered active, whereas devices or tags having no power supply and/or processors are considered passive. Passive devices or tags, such as smart cards, for example, may absorb energy (and receive data) from an active device through the aforementioned magnetic inductive coupling. Such a passive device or tag, when it is powered by at least one active device, may communicate and exchange data with the device or other devices.

NFC tags, which are typically implemented as active or passive NFC-capable devices fixed to other objects, such as stationary or moveable walls, posters, counters, tables, and even fixed or mobile computing devices, may be passive or active. In a situation in which a passive tag is put into range of an active NFC-capable device, an RF signal created by the active device can, for example, provide sufficient energy to the tag to allow the tag to "boot up" and/or otherwise execute one or more processes represented by machine-readable code stored in non-transient memory resident on the tag. Such code may, for example, include suitably-encoded algorithm(s), and may initiate transfer of data to the active NFC-capable device. Similarly, the passive tag may accept and/or enable transfer(s) of data to and/or from the active NFC-capable device and may further communicate with one or more remote devices and/or servers using, for example, alternate data communications protocols via one or more networks 900, 8141 such as the Internet. Although one or more active tags may communicate together, passive tags typically rely on the availability of remote power source(s) such as active NFC devices to initiate communication-related actions. In some cases, data transfer capabilities of passive tags have heretofore been relatively limited.

Although various types of tags may be created, and a wide variety of such tags are and/or will be compatible with the purposes disclosed herein, there currently exist at least four types of widely accepted tags (having the designations of Type 1, Type 2, Type 3 and Type 4), each typically associated with different formats and capacities. Type 1 tags, for example, are commonly based on the ISO/IEC 14443 Type A standard, have read/write capabilities, may be modified during use, may contain a memory capacity up to 2 kB, use 16 or 32 bit digital security features, and may have a communication speed of up to 106kbps. Type 2 tags are also based on the ISO/IEC 14443 Type A standard, have read/write capabilities, may be modified during use, may contain a memory capacity up to 2 kB, generally lack a security signature, and may have a communication speed of up to 106 kbps. Type 3 tags are based on the Sony FeliCa contactless smart card interface, may contain a memory capacity up to 2 kB, and may have a communication speed of up to 212 kbps. Type 4 tags are compatible with both the ISO/IEC 14443 Type A and Type B standards, are pre-configured during the manufacturing stage, are read and/or write only, may contain a memory capacity up to 32 kB, and may have a communication speed of up to 424 kbps.

Tags of each type may be coded or otherwise adapted to enable data transfers such as those mentioned above. For example, they may comprise suitably-configured stored binary code(s), or other machine-readable and/or executable data and/or coded instruction sets, or the like, consistent with implementation of such purpose(s). Thus, for example, coding of a tag can enable the tag to exchange data with compatible NFC-enabled reading device(s), e.g., as discussed throughout the disclosure.

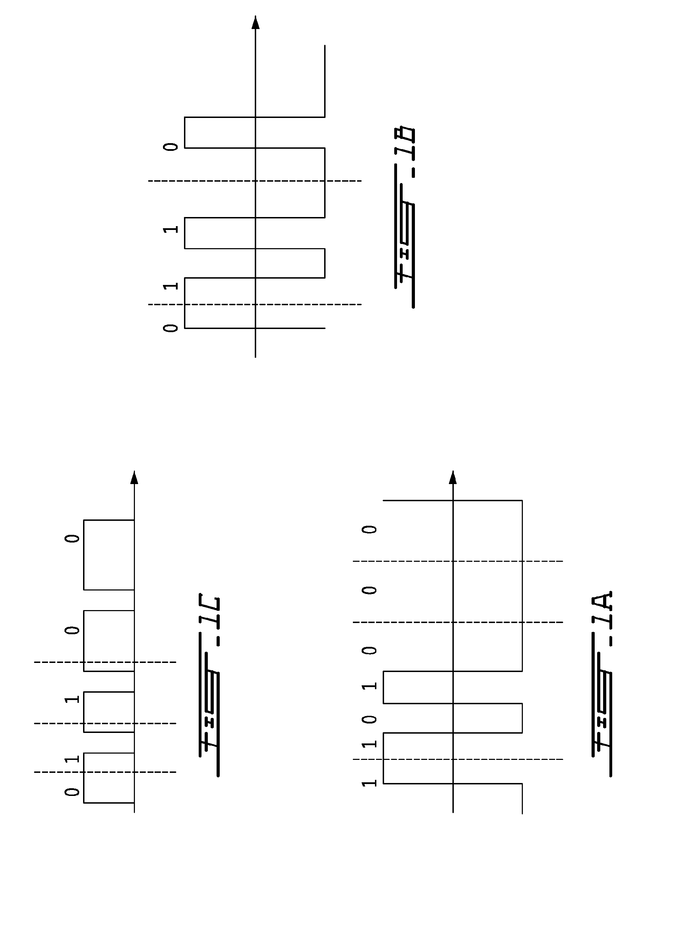

Figures 1A-1C provide schematic illustrations of coding schemes suitable for use in implementing various aspects and embodiments of the disclosure. In the embodiments shown, **Figs. 1A-C** represent three current commonly-used binary coding techniques used in NFC data transfer processes, namely NRZ-L, Manchester, and Modified Miller. In NRZ-L coding, illustrated in **FIG. 1A****,** a high state during one bit duration refers to a 1 bit and a low state expresses a 0 bit. NRZ-L coding can use 10% amplitude shift keyed (ASK) modulation and is compatible with data transfer speeds up to 848 kbps. Manchester coding, illustrated in **FIG. 1B****,** can utilize transitions that may occur at the midpoint of a signal period. A low-to-high transition can be interpreted as expressing a 0 bit, whereas a high-to-low transition can be interpreted as representing a 1 bit. To achieve these conditions it can be necessary, or otherwise desirable, to disregard transition(s) ocurring at the middle of a bit period. Manchester coding protocols can also employ 10% ASK modulation schemes, and are generally compatible with data transfer speeds of 106 kbps. Modified Miller code can be characterized by pauses occurring in the carrier signal(s) at different positions of a period. Depending on the information to be transmitted, bits may be coded as shown in **FIG. 1C****.** A high or "1" can for example always be encoded/interpreted in the same way, while a low or "0" may encoded/interpreted differently dependent upon what preceded it. Many mobile wireless communications devices operate in communications mode(s) using modified Miller codes and 100% ASK modulation, with data transfer rates ranging from 212 kbps to 424 kbps. Further details are set forth in the Mobile NFC Technical Guidelines, Version 2.0, November 2007 by GSMA, the disclosure of which is hereby incorporated by reference in its entirety.

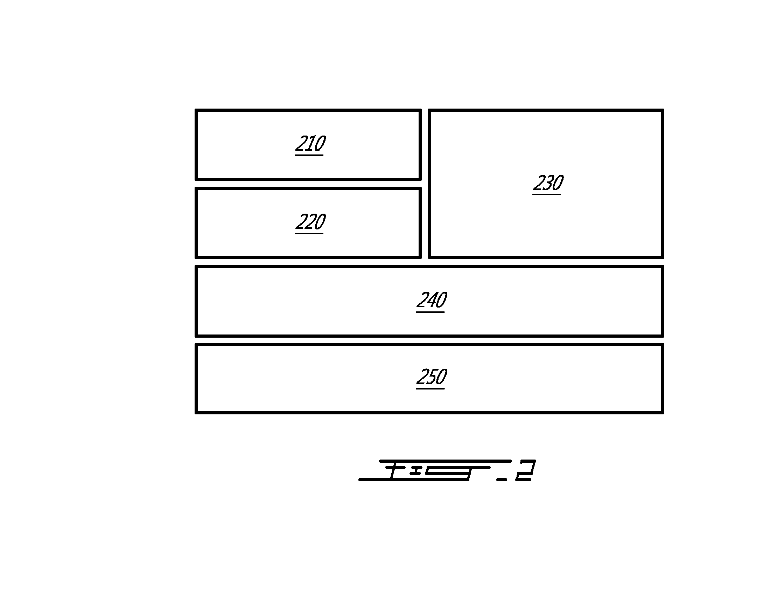

An exemplary NFC stack architecture (NFC stack) suitable for implementing NFC communications in accordance with the disclosure is illustrated in **FIG. 2**. An analog protocol 250 may be used to determine the operating range of an NFC capable device. A digital protocol 240 may be used to create a successful communication environment by establishing, for example, polling cycles and collision detection in accordance with industry standards such as, for example, those discussed herein. For example, and in accordance with the NFCIP-1 standard, responsive to sensing modulation of an initiator electromagnetic carrier field by the target device, an initiator device may perform an initial collision avoidance sequence by transmitting an ATR_REQ (attribute request) command to the target device. Responsive to receiving the ATR_REQ (attribute request) command, the target device may transmit a response called ATR_RES (attribute response).

Tag operations 220 may allow for commands and instructions to be successfully exchanged with specific tag types and may enable read/write capabilities with certain protocols, such as, for example, NFC Data Exchange Format (NDEF). As will be appreciated by those skilled in the art, NDEF is an industry standard data format for NFC enabled devices.

Tag operations 220 may also utilize one or more Record Type Definition (RTD) mechanism(s), or protocols, which may provide, among other features, a way to efficiently define record formats for applications 210. Suitable RTDs may include, for example, any or all of Text RTD (which can provide an efficient way to store text strings in multiple languages by using the RTD mechanism and NDEF format); URI RTD (which can provide an efficient way to store Uniform Resource Identifiers (URI) by using, for example, an RTD mechanism and an NDEF format); Smart Poster RTD (an example of which defines one or more NFC Forum Well Known Types useful in storing and/or otherwise associating URLs, SMSs, or phone numbers, or other identification/contact data with or on an NFC tag, and/or to transport such data between devices, and which can build on the RTD mechanism and NDEF format, using for example URI RTDs and Text RTDs as building blocks); Generic Control RTD, which can provide a simple way to request a specific action (such as starting an application or setting a mode) to an NFC capable device (destination device) from another NFC capable device (e.g., tag or card source device); and Signature RTD, which can specify format(s) used when signing single or multiple NDEF records, define required and optional signature RTD fields, and/or provide list(s) of suitable signature algorithms and certificate types that can be used to create an NFC authorization signature.

Non-protocol or non-NDEF applications 230 may be included and may include vendor specific applications, such as, for example, [ADD APP]. Such applications can be of any suitable format and, like all processes used in implementing the disclosure herein, may not be based on or compatible with generally accepted protocols, such as NDEF.

In embodiments in which established NFC communications protocols are used to implement processes in accordance with the disclosure, protocols such as Simple NDEF Exchange Protocol (SNEP) may be used. SNEP may, for example, enable an application on one NFC-capable device to exchange NDEF messages with another NFC-capable device during operation(s) in a peer-to-peer mode. Such protocols may use Logical Link Control Protocol (LLCP) connection-oriented transport modes to provide or enable reliable data exchange(s).

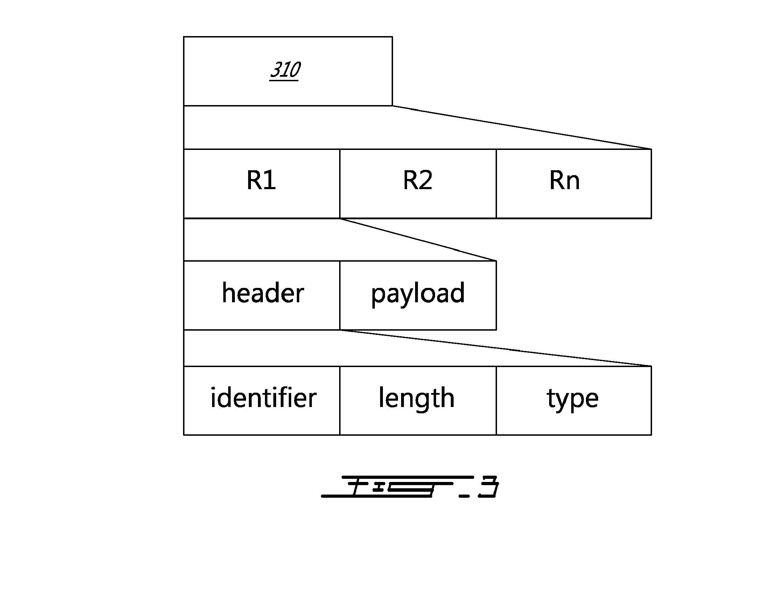

Figure 3 provides a schematic illustration of an embodiment of a message data set 310 suitable for use in implementing NFC communication processes in accordance with the disclosure. In the embodiment illustrated in FIG. 3, NDEF message 310 comprises one or more records, or items, (R1, R2,...,Rn). A limit for the number of records that may be encapsulated into a single NDEF message, if any, may, for example, depend upon factors such as the NFC communications application Y10 in use, the type(s) of NFC tags used, etc. As illustrated, each message may comprise a sequence of records with each record consisting of at least two parts: a header, and payload or content data. The header may include data representing a wide variety of address, control, and similar information, such as for example payload length, payload type, and payload identification. In some currently-common embodiments, the payload length as included in the header is generally four octets long (although a zero is a valid payload length). Payload type can for example indicate the kind of data being carried in the payload of that record. Such information may, for example, be used to guide interpretation and/or other processing of the payload at the discretion of the controlling application(s). The payload identifier, which in many embodiments is an optional field, may allow applications to identify the payload carried within a given record. The payload itself may be of one of a variety of different types, including for example any one or more URLs, MIME media sets, and/or NFC-specific data type(s). By way of example, for NFC-specific data types payload contents may be defined in one or more RTD files, as discussed above.

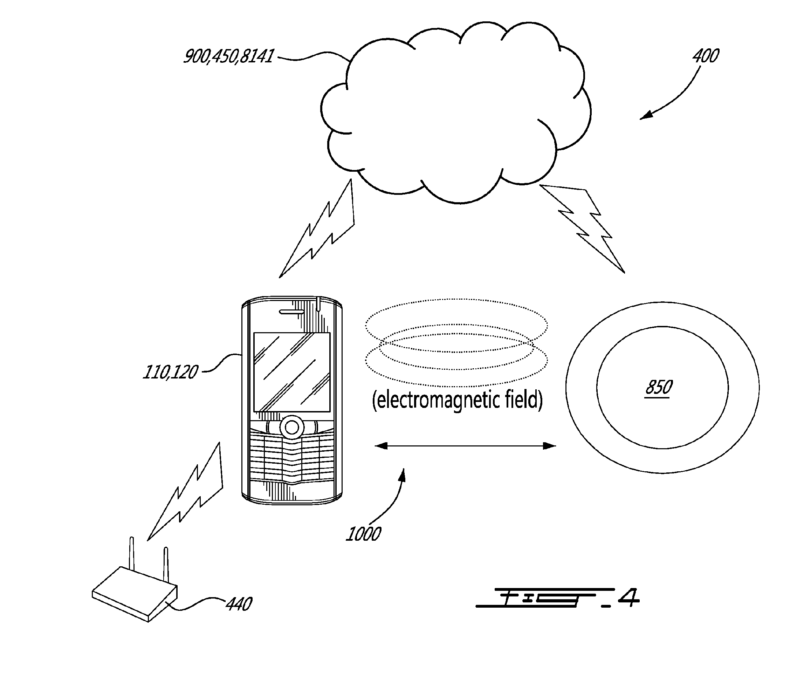

Figure 4 provides a schematic illustration of an embodiment of a communication system 400 suitable for use in implementing aspects of the disclosure. In the embodiment shown, system 400 is suitable for implementing peer-to-peer NFC communications between active NFC-capable devices 810, including, in the embodiment shown, two devices 810x, 810y.

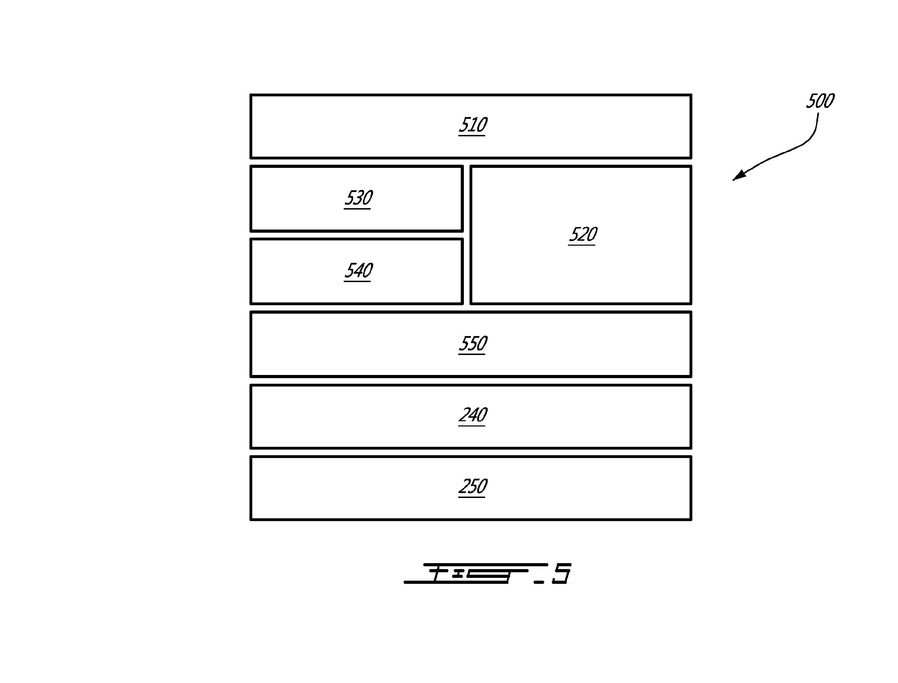

Figure 5 provides a schematic illustration of an embodiment 500 of a stack architecture suitable for use in implementing communications using systems such as system 400 shown in Figure 4. As previously noted, and using the example of system 400, one or more analog protocols 240 may be used to determine an operating range of either or both of NFC-capable devices 810x,y. One or more digital protocols 250 may be used to create a suitable communication environment by establishing, for example, polling cycles and collision detection sequence(s), in accordance with industry standards, for example. Further, link logic control protocol (LLCP) 550 may facilitate transfer of data between the devices when peer-to-peer or other suitable communication session(s) have been established. LLCP(s) 550 may, in part, define open systems interconnection (OSI) data link protocol(s) used to support the peer-to-peer or other communication. Further, either or both of protocols 540, 530, may include original vendor, industry, and/or other standard protocols and may interact with exchange protocol(s) 520, which may for example facilitate the exchange of messages between communicating devices (e.g. devices 810) and may allow for protocol(s) 540 and/ or 530, for example, to run over LLCP 550. Any or all such protocol layers may contain or otherwise implement security keys, and may be used in authentication process(es) initiated between communicating devices. Further, application layer(s) 510 may run on top of each of protocols 540, 530 and 520 and may include code as described herein.

NFC-capable devices may operate in a great variety of communications modes, including many now known and many others which will doubtless hereafter be developed. For example, NFC-capable devices, including active devices 810, may operate in card emulation modes useful in commercial, access, and other secure information transactions, using a variety of digital and analog protocols now known and hereafter developed, including manners compatible with known industry standards. Such emulation modes may, for example, include proprietary contactless card/tag applications for payment, ticketing and building- or area access control processes.

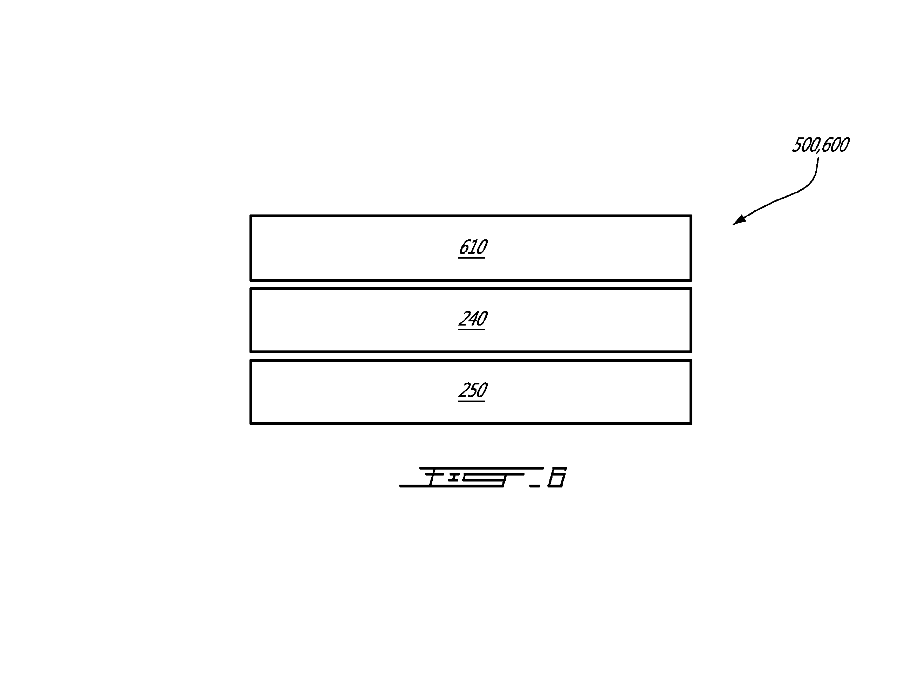

Figure 6 provides a schematic illustration of an embodiment of a stack architecture 500, 600 suitable for use in implementing card emulation mode(s) for NFC communications, including for example reading of suitably-configured NFC tag(s). As illustrated in **FIG. 6**, protocol stack 600 for card emulation allows card application(s) 610 to ride on analog protocol(s) 240, which may be used among other purposes to determine the operating range of an NFC capable device, and digital protocol(s) 250, which may be used among other purposes to create successful communication environment(s) by establishing, for example, polling cycles and collision detection, in accordance with industry standards, such as, for example, those discussed herein.

As shown for example in **FIG. 4**, a first NFC capable device 810x may communicate via NFC communication with at least one other NFC capable Device 810y when the devices are in close proximity to each other. Such interaction may be considered a peer-to-peer NFC interaction between the devices, even though each one of the devices may have the concurrent ability to communicate with other NFC and non-NFC capable devices using both NFC and other communication means. For example, as illustrated, NFC capable device 810y may be engaged in peer-to-peer communication with NFC capable device 810x while communicating with baseband access 430, such as a telephone (i.e., voice) system 8141 or other network 900, which may take the form of a cellular base station, for example. As will be appreciated by those skilled in the relevant arts, baseband communications may take place using various wireless communication means, such as CDMA, TDMA, FDMA, OFDMA, SC-FDMA, and other wireless protocols.

Similarly, NFC capable device(s) 810x may be communicatively coupled to one or more wireless local area networks WLAN 440, such as a Wireless Fidelity (WiFi) network, or a wireless wide area network (WWAN), such as 3GPP or 4G Long Term Evolution (LTE) (not shown), for example. By way of non-limiting example, and as will be appreciated by those skilled in the relevant arts, WiFi is typically deployed as a WLAN that may extend home and business networks to wireless medium and may follow standard(s) such as the IEEE 802.11 standard. Wireless communications connection(s) may also be established using, for example, short-range communications subsystem(s) which may for example include infrared device(s) and associated circuits and components as described above, and/or Bluetooth communications module(s), to provide for communication with compatibly-enabled systems and devices as well as NFC communications, etc. By way of further example, the herein disclosed devices, systems, and methods may utilize any short- and/or long-range communications subsystem(s) which enable communication between at least two devices, active and/or passive, whether proximate or not, including, for example, at least one server remote from a first device.

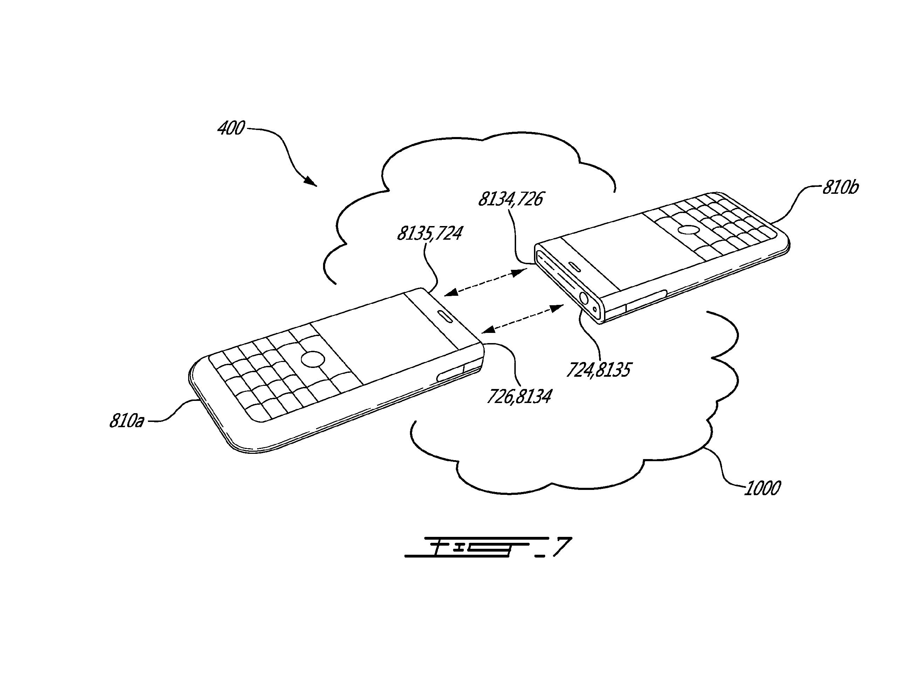

**FIG. 7** illustrates an example of two similar or otherwise compatible wireless communications devices 810a, 810b brought together, as for example through a physical movement or gesture towards each other, into close proximity or actual physical contact in order to provide a simple interface and initiate a wireless NFC connection. The embodiment(s) discussed in connection with FIG. 7 are applicable to both active device(s) 810a and passive device(s) 850, e.g., tag(s), as discussed further below.

Physical placement of device(s) in close proximity to or contact with each other device can provide a suitable environment for establishment of simple and low-powered wireless connection(s), through employment of, for example, the Hall Effect, which, can be used, by for example means suitable magnetic field sensors, to trigger Bluetooth, WiFi, and/or other wireless NFC connections. In the example shown in FIG. 7, each device 810a, 810b is provided with a magnet 724 and an environment or field sensor 726, such as a Hall Effect sensor. Such devices 810 may be matched by touch or gesture, sometimes termed a "kiss" or "tap" gesture because the two devices 810a, 810b typically touch or "kiss" or "tap" each other or are very close and in adjacent proximity. An example of this adjacency may be proximity in the range of about less than 10 or 20 mm, depending on the strength of the magnet(s) 724 and/or sensor(s) 726, and in one example, about 7 mm or less between a tag 850 and a device 810, or between the two devices 810a, 810b in the illustration. Sensor(s) 726 on each device may for example be aligned to one or more magnets 724 on the respective other device, as illustrated in **FIG. 7**. One device's sensor senses ("sees") the other's magnet via the Hall Effect, and a voltage or other field and/or signal variation from the sensor is transmitted to a processor such as one or more of processors 8180, 8132a, 8158, etc., in order to activate a Near Field Communication (NFC) circuit 8132 and communicates with the other device using, for example, protocol(s) associated with NFC Stack(s) 500, 600. The devices 810, 850, etc. can then read data from each other using NFC. Communications protocol data for wireless connection(s), such as the Bluetooth connection, can also be obtained based on data received using the NFC connection. For example, PIN numbers and security keys may be exchanged using NFC to establish a Bluetooth connection.

As will be explained in detail below, a communications device 810 may likewise establish communication with a passive peripheral 850, such as a tag, by placing the device 810 into close proximity or touching the device to the passive magnetic tag (NFC tag 850 in this example), thus initiating a NFC connection with the peripheral. As used herein, a passive magnetic tag, magnetic tag, or simply tag may refer to any of a variety of different devices, including NFC tags, RF ID tags, or other data storage devices with passive transmission capability. If the tag 850 is blank, the tag may be programmed by device 810a in some cases. If the tag 850 is already programmed, the communications device 810a may overwrite information stored thereon, write additional information to the tag, and/or read information from the tag, which may lead to further action. For example, if the tag 850 is associated with a printer, the communications device 810 can run a print job on the printer, as discussed further below.

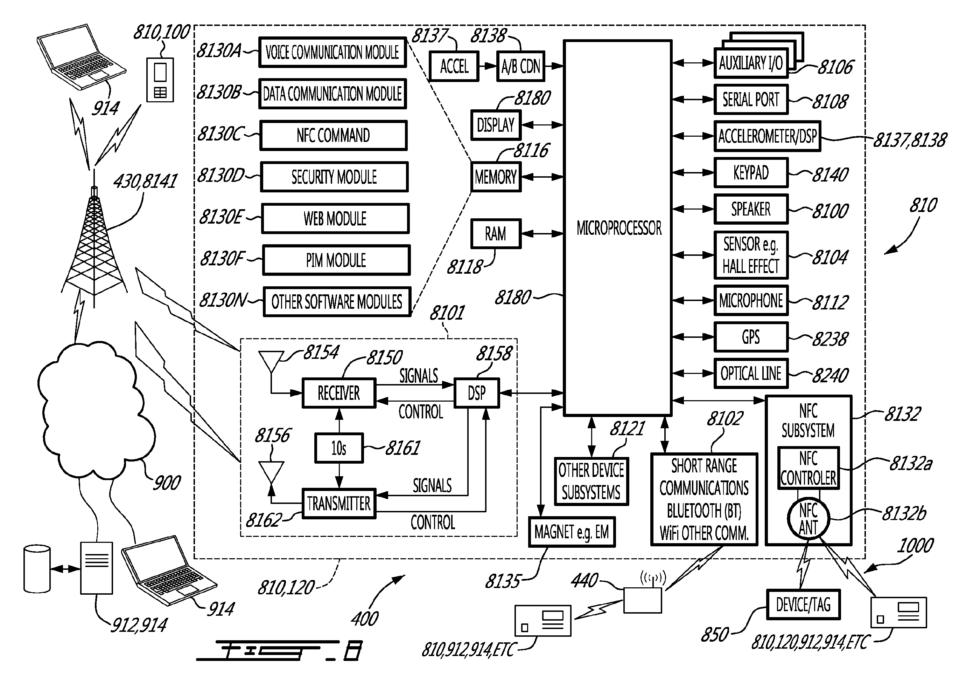

Figure 8 provides a further schematic illustration of an embodiment of a communication system 400 suitable for use in implementing aspects of the disclosure, including schematic details of an active NFC-capable device 810 suitable for use NFC and other communication interactions between the device 810 and other systems and devices.

In the embodiment shown in Figure 8, an active wireless handheld device 810, 120 is configured for communication with a wide variety of external devices via a number of communications (sub)systems. For example, using an NFC (sub)system 8132, the device 810, 120 is configured to communicate with any one or more of passive NFC device(s) 850, such as RFID and/or other NFC tags; optionally non-mobile active device(s) 120, 850, 912, 914 etc such as stationary computers or other devices, including for example vendor point-of-sale transaction devices; and/or NFC-capable mobile devices 810, 120 such as smartphones and/or laptop, palmtop, and/or tablet computers.

As explained further below, the device 810 shown in Figure 8 is further capable, via wireless network communications (sub)system 8101, 8102, of communicating with a wide range of devices, including for example server(s) 912 and/or other computers 914 via the internet, the public switched telephone network (PSTN) and/or other wired wide-area or local-area public or private network(s) 900, 8141, 440, and/or one or more smartphones 810, computers 914, servers 912, and other active systems 120 via cellular and/or other wireless telephone networks. For example, an active NFC device 120, 810 may be communicatively coupled to one or more wireless local area networks (WLANs) 440, such as a Wireless Fidelity (WiFi) network, or a wireless wide area network (WWAN) such as 3GPP or 4G Long Term Evolution (LTE) network (not shown).

The embodiment of the mobile NFC-capable device 810, 120 shown in Figure 8 comprises a range of functional components that may be included in, for example, smart-phone embodiments of devices suitable for use in implementing the disclosure. In the example shown, a device 810, 120 includes, among other components, housing(s) 8120; input device(s) such as keypad(s) 8140, microphone(s) 8112, analog/digital (a/d) converter(s) 8138, touchscreen and/or other display(s) 8160, hall effect or other field/proximity sensor(s) 8134, 726, and optionally navigational / positioning aids such as global positioning system(s) (GPS(s)) 8238, optical or imaging reader(s) 8240, such as one or more digital cameras and/or barcode readers, quick response (QR) readers, or other scanners; output device(s) such as touchscreen and/or other display(s) 8160, speakers(s) 8110, and magnet(s) or other field/proximity generator(s) 8135, 724; and input/output (I/O) device(s) such as uniform serial bus (USB) auxiliary input/output port(s) 8106, parallel or serial port(s) 8108, NFC (sub)system(s) 8132, including Bluetooth and/or other short-range communication (sub)system(s), touchscreen display(s) 8160, and wireless/radio transceiver (sub)system(s) 8101.

As will be understood by those skilled in the relevant arts, device(s) 810, 120 may include any of a wide variety of these and other components and (sub)systems, in any desired combination(s); and they may interact in any of a wide variety of ways, in addition to those described herein.

As will further be understood by those skilled in the relevant arts, handheld device(s) 810, 120 can comprise any of a very wide range of mobile devices, including for example cellphones, smartphones, and other radio-based communications devices, as well as laptop, palmtop, and tablet computers. "Handheld" means portable and operable using one or both hands; and, in the case of smart phones, can but does not necessarily mean devices that are roughly the size of an average human palm.

One or more processors 8180, 8158, 8132(a), etc., working singly or in any desirable or otherwise suitable combinations, can use inputs generated and/or otherwise provided by any one or more of the various input device(s) 8140, 8112, 8138, 8160, 8134, 726, 8238, 8240, 8106, 8108, 8132, 8101, 8102, 8121, and locally and/or remotely-accessible peripheral devices 912, 914, such as printers, servers, telephones, computers, etc., to generate, according to suitably-configured logic rules, output signals suitable for processing by any one or more of the various output device(s) 8160, 8110, 8135, 724; 8106, 8108, 8132, 8101, 8102, 8121, and locally and/or remotely-accessible peripheral devices 912, 914, etc..

Any or all of processor(s) 8180, 8132a, 8158, etc., along with any other desired components and/or (sub)systems incorporated by a device 120 may be protectively and/or functionally contained within housing 8120(s) and coupled, as for example by means of suitably-configured buses, etc., between the various memory, input, output, and auxiliary devices (such as battery(ies), solar power generators, etc) in order to perform the functions disclosed herein. Processor(s) 8180, 8132a, 8158, 8102, 8121, etc., may be of any suitable form(s). For example, CPU(s) 8180 may comprise one or more microprocessors chip contained on or otherwise attached to one or more circuit boards within housing(s) 8120. CPU(s) 8180 can provide general command and control functions including, for example, operation of the display 8160, as well as the overall operation of the mobile device 810, in response to received information and inputs, such as in response to actuation of keys on the keypad 8140 by the user. Processors 8102, 8121, 8132a, 8158, etc., may be provided to control specialized functions such as operation of NFC and other particular communications channels.

Logic rules suitable for use by processors 8180, 8138, 8132a, 8102, 8121, etc., in generating such outputs can be accessed from any suitable locally and/or remotely located source(s), including, for example, any one or more applications modules 8130A - N, etc., as, for example, explained herein. Such rules and modules can be provided in any form(s) suitable for achieving the purposes addressed herein, including for example software instructions stored in transient (volatile) and/or non-transient (persistent) memory, firmware, and hard-programmed hardware device(s) or component(s) and configured for causing processor(s) 8180, 8132a, 8158, 8102, 8121, etc., to execute, singly or in combination, any or all of the process(es) described herein.

Memory(ies) 8118, 8116, etc., which can be of any form compatible with the purposes disclosed herein, including, for example, flash, EEPROM, RAM, ROM, disk, register, etc., can be accessed, controlled, and otherwise used 8180, 8158, 8138, 8132(a), etc., for reading data used in the various processes described herein, for storing output so generated, and for holding executable forms of suitably-configured application and/or module instruction sets. Such stored data may, for example include operating system, application, and other software executed by the processing device 8180, as well as inputs and/or outputs for such software.

As shown in Figure 8, an active NFC device 810, 120 can comprise and/or otherwise support multiple communications abilities, and thus may have the ability to conduct concurrent communications sessions with other devices 810, 850, 912, 914, etc., using NFC, voice, and/or other communication means. For example, as illustrated, an NFC capable device 810 may be engaged in peer-to-peer communication with a second NFC capable device 810, while also communicating, via baseband access point 8141, 430, which may take the form of a cellular base station, for example, or devices or systems connected thereto, with a wide range of devices such as telephones 810, servers 912, computers 914, etc.

Long-range (e.g., cellular) voice and/or text communications processes may be provided for an active device 810, 120 by one or more wireless communications subsystems 8101, comprising transmitter(s) 8152, 8156, receiver(s) 8150, 8154, and digital signal processor(s) (DSP(s)) 8158.

Short-range communications may be provided by either or both of NFC subsystem(s) 8102, 8132, which may for example comprise dedicated antenna systems for short-range aspects; specialized memory device(s) 8116, 8118, and other device subsystems 8121.

Mobile NFC-capable device(s) 810, 120 in accordance with the disclosure may therefore be considered, in the examples shown, example, two-way RF communications devices having voice and data communications capabilities using RF circuitry. In addition, the mobile device 810, 120 may have the capability to communicate with other computer systems 810, 912, 914, etc., via the Internet or other network(s) 900. For example, a device 810, 120 may communicate with one or more servers 912, such as Internet servers, via RF subsystems 8101 and the associated components, including web module 8130E, and further via short-range communications subsystem(s) 8102, such as via web/browser module(s) 8130E. System(s) 8102 may include, for example, one or more Bluetooth communications modules for establishing Bluetooth wireless connection(s), and other communications modules, such as infrared modules or devices, WiFi circuits and modules, and associated components and circuits that may also form part of the RF circuitry.

A predetermined set of applications that control basic and optional device operations, such as data and voice communications 8130A and 8130B, may be installed on the device 810, 120 during manufacture. Application modules 8130A-N may include native and non-native modules for security 8130D, Web interaction 8130E, social interactions or applications, and the like.

NFC communications module(s) 8130C may include any or all hardware, firmware, and/or software necessary or desirable for enabling NFC controller(s) 8132A (which may themselves include hardware, software, and firmware as required) working optionally in conjunction with microprocessor(s) 8180, etc., to perform NFC communications tasks. NFC communications module(s) 8130C may, in various embodiments, support responsive operability for tag 850 reads/writes, whether virtual or physical, by interacting with other modules and apps to affect data stored on tag(s) 850, and/or to obtain or write tag data. Such other modules may for example include web module 8130E, PIM module 8130F, and other software modules 8130N (such as apps and video players, by way of non-limiting examples). Microprocessor(s) 8180 may also cooperate with NFC module(s) 8130C, and with NFC subsystem(s) 8132, which may include one or more NFC chips comprising NFC controller(s) 8132a, and antenna(s) 8132b to facilitate communications with other active and/or inactive NFC device(s) 810, 850, as discussed herein. For example, an NFC communications module 8130C may allow a microprocessor 8180 to control the NFC subsystem 8132 and/or memory stores 8116, 8118.

NFC chips 8132a suitable for use in implementing aspects of the disclosure may, for example, comprise one or more PN531 microcontroller-based transmission modules produced by Koninklijke Phillips Electronics N.V. Such NFC chips 8132a may, for example, include both digital and analog circuitry, and one or more contactless Universal Asynchronous Receiver Transmitters (UARTs), cores, and host interfaces. Incorporated circuitry may include output drivers, integrated demodulators, bit decoders, mode detectors and RF-, magnetic, and/or level detectors as suitable. Suitable contactless UARTs may include elements for data processing, Cyclical Redundancy Checking (CRC), parity generation, framing generation and check bit coding and decoding, and/or other functions. Cores may, for example, include one or more 80C51 microcontroller, 32 Kbytes or other amounts of ROM and, one Kbyte or other amounts of RAM, for example. A set of host interfaces may interface with the microprocessor and interface according to spuch known standards as I2C, serial UART, SPI and USB. NFC circuits may be tuned to any frequency(ies) suitable for accomplishing the purposes disclosed herein, as for example about 13.56 MHz.

NFC (sub)system(s) 8132 may comprise and/or otherwise cooperate with one or more magnets/magnetometers or other magnet sensors 8134, such as Hall effect sensors 8134, 726, communicatively connected to the microprocessor(s) 8180, 8132a. Sensor(s) 8134 may include components suitable for operation as a Hall effect sensor 726, including any necessary coils or other circuits. There is also illustrated a magnet/magnetometer 8135, 724 that, in various embodiments, may be advantageously be provided in the form of one or more electromagnets and may operate with microprocessor(s) 8180, 8132a, etc., to allow one or more alternate communications pathways using electromagnetic energy, which may be changed to correspond to changing data. Electromagnet(s) 8135, 724 may perform a variety of different functions, including working as an active or passive device in association with other components of the device 810. For example, when an electromagnet 8135, 724 is used instead of a permanent magnet (non-electromagnetic) in the devices of Figure 3, a pulse of energy may be delivered to a Hall effect sensor 726 in another device 810, 850. The other device receiving the pulse may accordingly activate its NFC circuit. A WiFi connection, for example, in the alternative may be established if an NFC and/or Bluetooth connection is not established. Other modules 8130N may include, for example, software that interoperates with the magnetic sensor 8134 and any magnet or electromagnet 8135 or other magnetic circuitry that may be included within the overall electromagnet 8135.

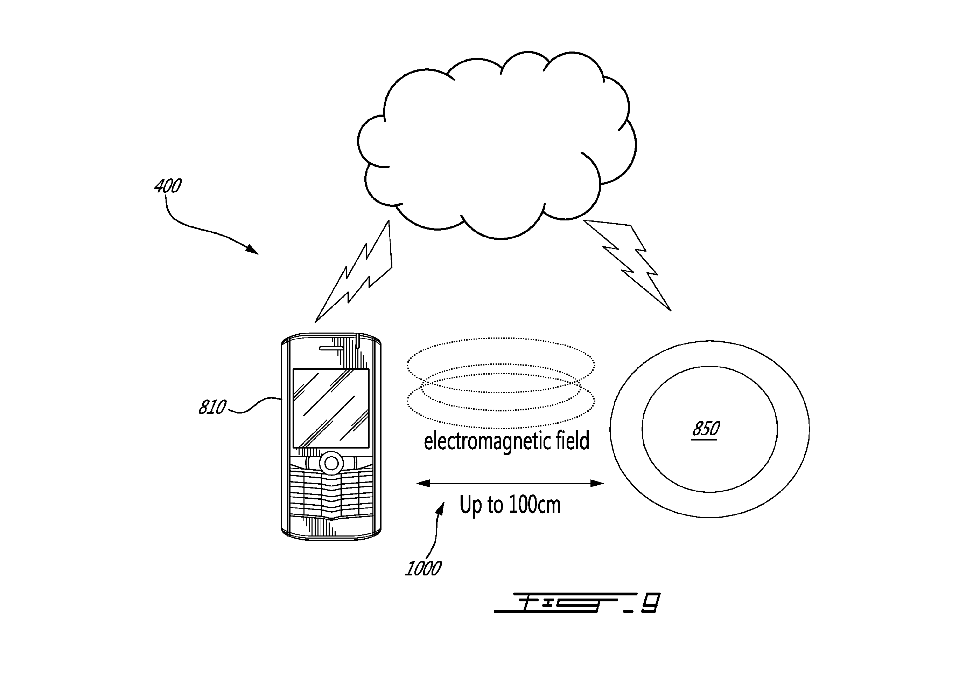

Accelerometer(s) 8137 and analog/digital converter(s) 8138 may be connected to the microprocessor 8180 as illustrated, and may allow another implementation of the NFC automatic tag detection (and automatic peer-to-peer detection). The accelerometer 8137 can be used, in conjunction with processor(s) 8180, etc., and suitable module(s) 8130N, to recognize the tapping of a communications device against a tag or another device, thus recognizing at least one vibration. Instead of, or in addition to, using the Hall Effect sensors 726 and magnets 724 to wake up the NFC circuit, the circuit can use tap recognition vibration sensors in the form of, for example, algorithms processing data provide by accelerometer 8137. It should be understood that when the device is tapped against another object, for example, an NFC tag 850 as illustrated in **FIG. 9**, a data transfer set-up profile may generated as a matter of predetermined accelerometer parameters being met or exceeded. If such a profile is compared against a known tap profile, it will wake the NFC circuit and initiate communication. In other embodiments, accelerometer 8137 may be part of a motion sensor system, and other motion sensor systems other than an accelerometer may be used such as a cadence sensor or cadence detection system.

As will be appreciated by persons skilled in the art, an accelerometer is a sensor which converts acceleration from motion (e.g., movement of the communications device or a portion thereof due to the strike force) and gravity which are detected by a sensing element into an electrical signal (producing a corresponding change in output) and is available in one, two or three axis configurations. Accelerometers may produce digital or analog output signals, depending on the type of accelerometer. Generally, two types of outputs are available depending on whether an analog or digital accelerometer is used: (1) an analog output requiring buffering and analog-to-digital (A/D) conversion; and (2) a digital output which is typically available in an industry standard interface such as an SPI (Serial Peripheral Interface) or I2C (Inter-Integrated Circuit) interface.

Accelerometers suitable for use in implementing the disclosure may be of any suitable form, including, but not limited to, capacitive, piezoelectric, piezoresistive, and/or gas-based accelerometer. The range of accelerometers varies up to the thousands of g's, however for portable electronic devices "low-*g*" accelerometers may be used. Example low-*g* accelerometers which may be used are MEMS digital accelerometers from Analog Devices, Inc. (ADI), Freescale Semiconductor, Inc. (Freescale) and STMicroelectronics N.V. of Geneva, Switzerland.

In addition, personal information manager (PIM) application module(s) 8130F may comprise one or more native modules installed during manufacture; and/or user-specific modules implemented on removable memories such as micro SD cards, etc. PIM(s) 8130F may be capable of organizing and managing data items related to, for example, specific users, such as email, contacts, financial accounts, calendar events, voice mails, appointments, and task items. A PIM application 8130F may also be providing and/or receiving data transmitted by via wireless network 40, 8141, and, for example, web module(s) 8130E. PIM data items may be seamlessly integrated, synchronized and updated via such wireless network(s) with the device user's corresponding data items, such as may be stored locally in memory(ies) 8116, 8118, etc., and/or in the cloud or as may be associated with a host computer system, for example.

Communication functions, including data and voice communications, may be performed through communications subsystem(s) 8101, and/or through the short-range communications subsystem(s) 8102. The specific design and implementation of the communications subsystem(s) 8101, 8102 may be dependent upon the communications network(s) 8141, 900 in which the mobile device 810 is intended to operate.

Such communication functions may, as referenced above, be carried out by software / instruction / data module(s) 8130B, voice module(s) 8130A, and/or web module(s) 8130D, including at the instruction of or through other cooperation with NFC module(s) 8130C, 8102, 8132, etc., in accordance with the disclosed embodiments, with security for these communications, such as in the granting of access to PIM module 8130F, overseen by security module(s) 8130D. Security module(s) 8130D may include one or more native or non-native security applications, including anti-virus/anti-malware applications or functions, and may provide protection for PIM information via applications or functions 8130A-N, and be applied during external interactions such as during NFC or Web communications processes, for example. Accordingly, security module(s) 8130D may allow for degrees of security in interacting with other devices, such as the aforementioned tags, and/or other devices such as servers (herein defined to include any device acting as an Internet, intranet, extranet, or other public or private network node, host, server, or the like), and particularly with devices, components, or other aspects of devices that enable the occurrence of communication exchanges by the device occur over a network 900, such as the Internet.

As previously noted, NFC processes may be conducted according to any of a wide variety of wireless, short-range communications protocols. Such protocols typically comprise sets of standards to enable devices 110, 120, such as smartphones and the like, to establish radio communication with each other by bringing them into close proximity, or by touching them together, and thereafter communicate clearly and efficiently. Applications of such processes include wireless data transactions and simplified setup of communication sessions involving communication technologies such as Wi-Fi and Bluetooth. Communication is also possible between a powered NFC device and a powered or unpowered NFC "tag" or button. Suitable standard currently in use are have been p promulgated by the NFC Forum, which was founded in 2004 by Nokia, Philips and Sony, and which now has more than 160 members. The NFC Forum also promotes NFC and certifies device compliance.

Standards have been developed that cover both NFC Forum - sanctioned communication protocols and other short-range wireless data exchange (NFC) formats. Specifically, an example of NFC standards ISO/IEC 18092 / ECMA-340; Near Field Communication Interface and Protocol-1 (NFCIP-1); ISO/IEC 21481 / ECMA-352; and Near Field Communication Interface and Protocol-2 (NFCIP-2). NFC also encompasses a variety of pre-existing standards including ISO/IEC 14443 both Type A and Type B, and FeliCa. The standards specify the NFC air interface, modulation schemes, coding, transfer speeds, and frame format of the RF interface of NFC devices. The standards also comprise initialization schemes and conditions required for data collision-control during initialization for both active and passive NFC modes. In addition, they define a transport protocol, including protocol activation and data-exchange methods.

NFC protocols sanctioned by the NFC forum typically operate within a globally available and unregulated radio frequency band of 13.56 MHz, and generally have a working distance of up to about 20 centimeters. Three data rates are currently defined in the NFC standards: 106 kilobits per second (kbit/s); 212 kbit/s; and 424 kbit/s.

In addition, the NFC Forum has defined a common data format called NFC Data Exchange Format (NDEF), which can store and transport various kinds of items, such as MIME-typed objects and URLs. The NFC Forum also added the Simple NDEF Exchange Protocol for sending and receiving messages between two NFC-enabled devices.

All of the above-mentioned standards and formats, along with any other existing and applicable NFC standards, are incorporated herein by reference as if fully set forth in their entirety, in their finalized condition.

Both passive and active communications modes have been defined. In active communication modes, both an initiator device and a Target device may generate their own NFC fields 1000 (see e.g., Figures 4 and 7). The initiator device may start the NFC communication, with the target device responding to commands received from the initiator device, as appropriate, by modulating the NFC field 1000 generated by the Target device.

Between two active NFC devices 810, either or both devices can act as either initiator or target. In passive communication mode, one of the devices lacks 850, or does not employ, an ability to independently create an electro-magnetic NFC carrier field 1000, and therefore generally does not serve as an initiator.

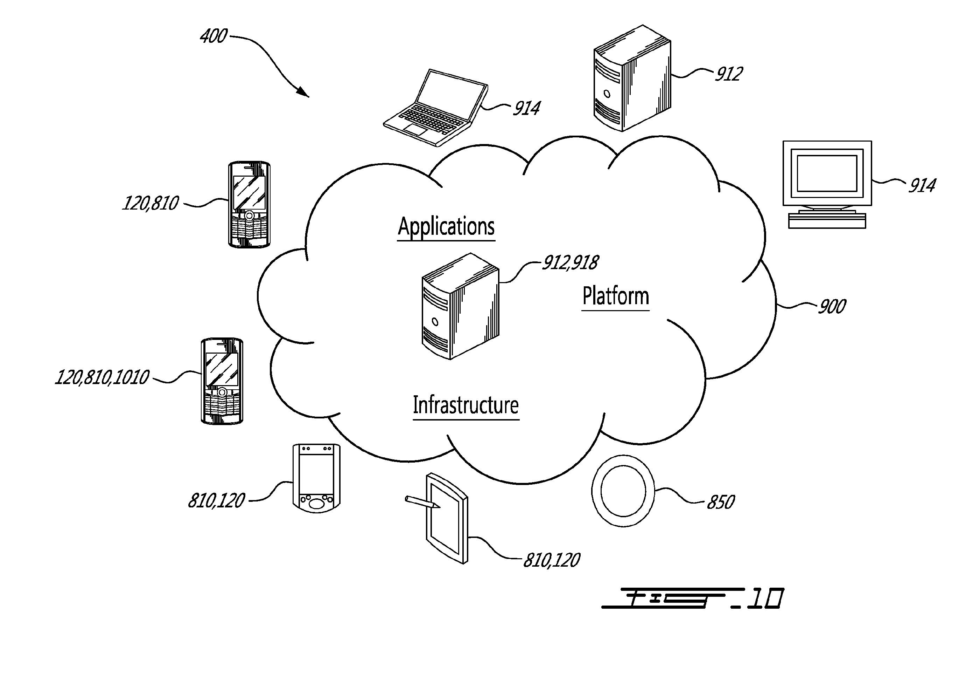

In the embodiment of a system 400 shown in FIG. 10, aspects of server(s) 912 are expanded, and as shown include an infrastructure model which may for example logically assign fault tolerance concerns within a software layer to provide, among other things, load balancing both internal and external to the cloud, thus allowing for more intelligent resource allocation, and a reduction in hardware needs, which may reduce costs, downtime issues and which may increase communication efficiencies (including the speed of communication). In general, the provisioning of a cloud server 912, 918 may include at least one node server running at least one Cloud OS, for example. Through access as described herein, devices such as, for example, laptops 810, 914, 120 servers 912, desktops 914, active ones of tags 850, tablets 810, 914, 120 and mobile devices 810, 120 may communicate with the at least one node server 912, 918. The server 912, 918 may include applications for such things as, for example, monitoring systems (for both content and service), content storage and management, collaboration, security modules, communications modules, and/or at least aspects of native/non-native applications. As used herein, native applications include applications included with or published by an NFC device original equipment manufacturer (OEM). Non-native applications are typically applications provided by third party developers or vendors, not the OEM. At least one platform level may include the provisioning of any one or more of at least the following resources: database, queue, runtime, identity and object storage, for example. Further still, and as discussed herein, a server 912 may include infrastructure including, for example, any one or more of least one the following: processors, block storage, network and a node servers.

As previously noted, systems 400, and devices 810, 120, 850, 912, etc., in accordance with the disclosure can be used to significant advantage in a very wide variety of applications. As a particular example, the disclosure herein provides improved methods for making and writing data to smart posters, and for systems 100 and devices 810, 120, 850, useful for making and writing data to such posters.

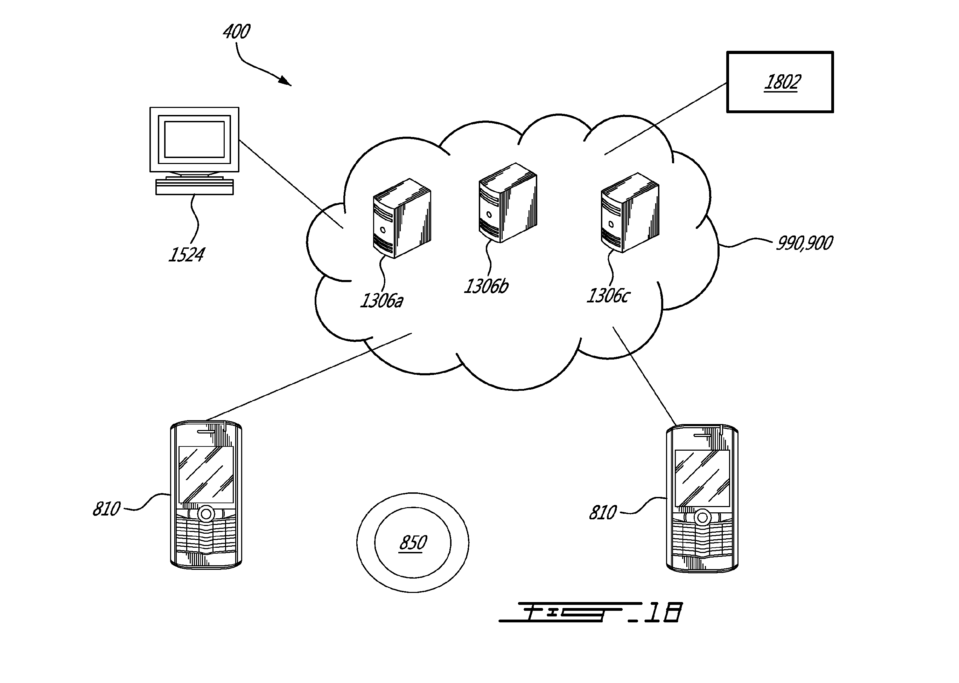

The present disclosure is directed to near field communication (NFC) processes, and more particularly to storage, interpretation, and/or other processing of of data representing device-executable and/or other-machine-executable instruction data sets, also called "actions," stored on NFC-capable devices, including passive NFC devices 850, such as tags, and making such data available for reading, execution, and or other processing by one or more active NFC devices 810, 120. Such instruction sets may comprise data, including for example URLs and/or other address or reference data useful for referring a device 810, 120 to networked resource(s) 912, 914, etc., to access content, instruction, and/or any other data, stored and/or executable thereby or thereon. Reading and interpretation of such instruction data sets may alternately, or in addition, cause suitably-configured processor(s) 8180, etc., invoke or otherwise access one or more local and/or remote application(s), and/or other local and/or remote resources, for execution. Locally-executed applications can for example include any one or more applications stored in module(s) 8130A-N; remote or otherwise networked application resources can include any executable instructions stored on or otherwise accessible in association with any of networked resources 912, 918, 1306, 1524 (Fig. 18), etc.

Thus, for example, a cloud-based server 912, 918 referenced by an NFC tag 850 (also referred to herein simply as a "tag"), may store, and make available for any one or more devices 810, 120, any desired actions, and thus may be used in creating, updating, reprogramming, or otherwise modifying actions by an owner or other operator of the NFC tag 850 (hereinafter also referred to as a "tag owner" or "tag creator") occasionally and/or in accordance with a predetermined schedule or in real time.

Actions provided in accordance with the disclosure may be "public", "private", or "semi-private," (or "personal", or "personalized") and may be secured and/or otherwise protected at and between various nodes 912, 914, 918, 850, 812, 120, etc., within a system 400, and may be used by, uploaded from, and/or discernable to one or more native device software applications 8130A-N, and/or one or more non-native apps (collectively, hereinafter "apps").

Actions suitable for use in implementing the disclosure may, as discussed further below, include machine-executable instruction(s) for any act(s), modification(s), indication(s), or other occurrence(s), and/or other device- and/or machine-executable instruction(s) which may be performed by any one or more device(s) 810, 120, 912, 914, etc., either in hardware, software, or firmware. By way of non-limiting examples, actions, as used herein, may include generating, reading, and/or sending e-mail(s); displaying information (such as a note or advertisement); navigating to, reading data from and/or writing data to any one or more network addresses (such as an Internet Protocol address or other reference); instantiating or invoking a media player and playing media; updating a calendar, voice-mail, social media or other personal or device profile status; launching an instant messenger or other communication(s) application and/or reading or creating an instant message, e-mail, or other communication; downloading a file and/or an application; changing a device control profile, such as a user preference profile for a wireless communication device 810, 120, etc., or a control profile for a home, office, vehicle, or other environmental control system, such as heating/air-condition system(s), interior/exterior lights, burglar alarms, etc.; creating a post (such as to a blog, Facebook, or Twitter, for example); sending an address or other location or contract identifier, or importing or exporting one or more contacts; performing a function in a non-native application; dialing a phone number; generating a hardware action (buzzing, ringing, lighting, etc.), or the like.

The disclosed exemplary embodiments may provide enhancements to prior embodiments of NFC systems. By way of non-limiting example, "private," "semi-private," or "personal" NFC tags 850, as that phrase is used herein, may indicate an interaction with a tag that is readable by or otherwise available solely to an authorized NFC device 810, 120, e.g., a device that programmed or is otherwise associated with the tag. On the other hand, "public" NFC tags, as that phrase is used herein, may indicate an interaction with an NFC tag that is, or that is also, available to one or more devices that did not program the tag, or are not otherwise authorized to execute secure stored instruction sets. Prior embodiments do not distinguish between public and private tags, in part due to a lack of reprogrammability other than by physical proximity, or "hard," reprogramming.

By way of non-limiting example, some embodiments may allow the coding of an Internet address (e.g., a URL), referred to in this example as an Address A, onto a tag or other passive device 850. In 'public' action variations of such embodiments, upon accessing the tag 850, any NFC capable device 120, 810, 850, etc., can be enabled to read the Address A, and the device's browser can accordingly access storage or other resources associated with the address, and read and display any available content associated with Address A. Reprogramming of Address A to point, or refer, the device's browser to another address or resource referred to herein as Address C, in such embodiments would require a reprogramming of the address coded onto the tag by a proximate NFC enabled device. If such reprogramming (or re-writing) can be accomplished by any NFC-compatible active device 810, 120, then the tag 850 could be considered a 'public' tag, and the reprogramming a public action; whereas if only authorized device(s) 810, 120 are enabled to do so, then the tag and its reprogramming / rewriting may be considered 'private.'

In other embodiments, a device 810, 120 having private access authorization to one or more tags 850 can code onto the tag(s) a server address, referred to as Address B in this example (which may be an Internet address different from Address A or C, above) or other information. Upon a public-authorized device accessing the tag 850 in such embodiments, the tag 850 can point to Address B and, as compared to the foregoing example, receive from Address B an action to open a browser and surf to Address A. Accordingly, if reprogramming is to point a public reading device to Address C instead of Address A, per the above example, a "soft" reprogram by the owner of the creating private device can done at Address B, i.e., Address B, upon reprogramming, will point a public reading device to Address C, rather than Address A.

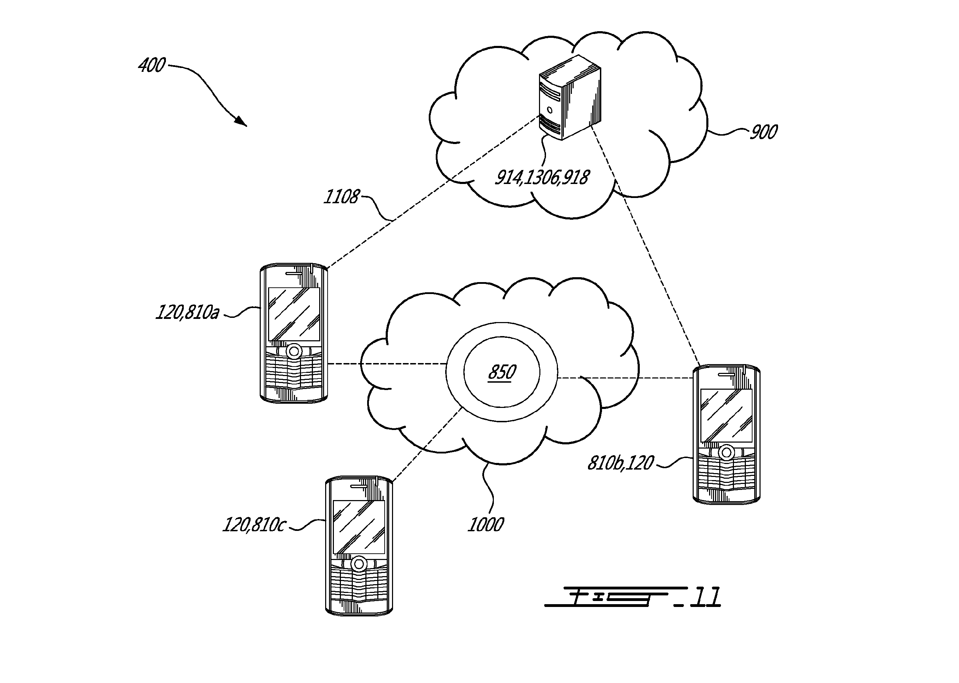

In embodiments discussed herein, and as explained above with respect to **FIG. 9**, an NFC tag 850, whether public or private, may be recognized by a reader device 810, 120 914, etc., (also referred to herein as a "reader"), and the reader device 810, 120, 914, etc. may react accordingly based, at least in part, on information resident on the NFC tag. More particularly, and as illustrated for in the network diagram of **FIG. 11****,** a device 810 interacting with one or more NFC tags 850 in exemplary embodiments may be communicatively pointed to a server 912, 918, 1306 by the NFC tag, wherein the cloud server 912, 918, 1306 may interact with the reader device 810 which is pointed to the server 1306 by the NFC tag 850, in order to enable the reader device 810 to execute and/or otherwise access enhanced actions obtained via communicative link(s) 1108 from the cloud server 1306 to the reader device 810. Such actions may be "enhanced" as compared to interactions available via current typical NFC tags, such as NFC tags that indicate solely an Internet Protocol (IP) address or a like data link.

In various embodiments, a "public" reader may refer to a device 810, 120, 914, etc., that did not, and/or is not authorized or otherwise enabled to, program or modify an NFC tag 850, and which is pointed to a cloud server 912, 918, 1306 referenced by the tag 850 to obtain or otherwise access an action, or may refer to any aspect of such a public reader device, its communicative links, and/or the actions it executes. Similarly, a "private" reader may refer to a device that did, or was authorized or otherwise enabled to, program or modify the NFC tag, and which may or may not thereafter be pointed to the aforementioned cloud server to obtain an action, or may refer to any aspect of such a private reader device, its communicative links, and/or the actions it executes.

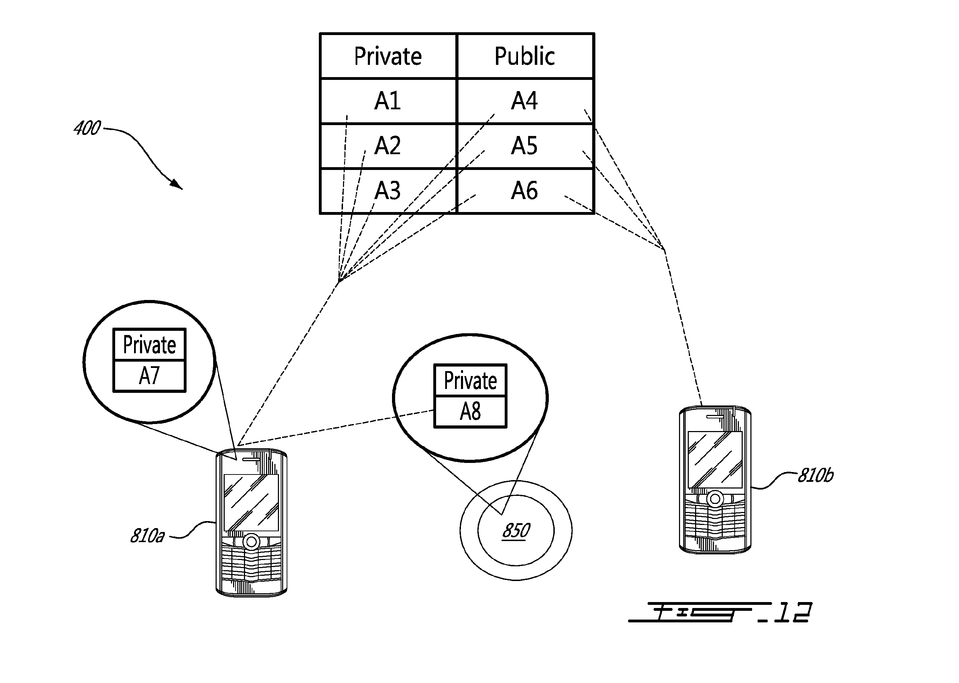

As further illustrated in **FIG. 12**, an NFC tag 850 may enable ("avail") a public reading device 810b to access address and/or other instruction data suitable for causing the device to execute one or more public actions, such as actions A4, A5, A6, that are made available by the cloud server to one or more relatively broadly-authorized public devices 810 accessing the NFC tag 850. When the NFC tag makes such data available to a wide pool of authorized devices (for example, all mechanically/electrically compatible devices having access to the public-switched telephone network (PSTN) or other network in this manner), it may be referred to herein as a "public tag."

The same or another NFC tag 850 may also enable (avail) a private reading device 810a, i.e., a device associated with ownership and/or other authorization to program (i.e., write content, instruction, and/or other data to) an NFC tag 850, any one or more "private" actions A1, A2, A3 that are made available by the cloud server to suitably-authorized or otherwise-enabled private device(s) but not to public reading devices; all, part, or none of the public actions A4, A5, A6 that are available to public devices, as may be directed by the tag owner; one or more private actions A8 hard coded onto or otherwise stored on the tag; and/or private actions A7 programmed into the device 810, 120 as private actions to be performed responsive to particular tag reads. In various embodiments, if the device 810 does not have or otherwise is not enabled to execute or otherwise access a private action corresponding to a particular read, it may go to a cloud server address obtained from the tag to seek a public action. When the NFC tag acts in the foregoing manners to provide private actions, it may be referred to herein as a "private tag."

As will be understood by those skilled in the relevant arts, once they have been made familiar with this disclosure, 'private' and 'public' may be used to describe relatively narrower and broader authorization levels associated with multi-tiered data access authorization schemes. For example, a 'private' authorization may allow access to data representing content, executable instructions, etc., by single or groups of devices authorized to write, re-write, and/or otherwise modify data stored on a tag 850, or groups of tags 850, or to single devices or groups of devices authorized to access and execute relatively restricted instruction sets stored on such tag(s). "Public" authorization may provide read and/or write access to such tags to relatively larger, or broader, or less-restricted groups of devices.

One or more levels each of public and/or private authorizations may be implemented using any desired and/or otherwise desirable criterion or criteria, including for example public- and/or private-key encryption, access codes such as PINs and passwords, and controlled system access, e.g., through compatible hardware devices and use of compatible protocols, and/or through the administration of user accounts such as telephone access contracts, etc.

Thus, for example, one or more data sets comprising readable or displayable content, or executable instruction sets, may be stored on passive NFC-capable device(s) 850 and, upon satisfaction of one or more authorizations, which may be increasingly restrictive, readable by one or more active devices 810, 120. A single passive device 810, 120 may comprise one or more data sets associated with a single authorization / authorization level, or it may comprise multiple data sets associated with multiple authorizations of different levels of restrictiveness.

As will be further understood by those skilled in the relevant arts, in light of the disclosure herein, data stored on passive device(s) 850 and accessed, conditioned upon satisfaction of authorization(s), if any, by one or more devices 810, 120 may represent either content suitable for display, audio / visual playback, etc., or device-executable instructions causing any of a very wide range of actions to be taken by the reading device(s) 810, 120. Such data may cause a reading device 810, 120 to refer to resources, including for example any of a very wide range of applications, stored on the device 810, 120 itself, and/or to resources accessible on any number(s) or type(s) of remote devices accessed over one or more networks 900, 8141,etc.

Server(s) 912, 918, 1306 etc. at which such actions are stored, and from which they may be accessed by device(s) 810, 120 may, in various exemplary embodiments, be enabled to identity device(s) 810, 120 that have communicatively linked to a server address responsive to a reading of a tag 850, such as to allow the server 912, 918,1306 and thereafter determine which action(s), if any, the reading device 810, 120 is entitled to execute or otherwise access. Such device identification may be performed, for example, by the server 912, 918, 1306 comparing an identification independently stored on or otherwise accessible by the server 912, 918, 1306 of a reading device entitled to ones of the actions shown in FIG. 12 to an identifying characteristic provided by or otherwise independently associated with the reading device 810, 120 that communicatively linked to the server. Such identifying characteristics may include, for example, possession and/or employment by the reading device of a particular encryption/decryption key, communication by the reading device in a communication slot or frame, a particular device signature, and/or information that may be provided in "overhead" for typical mobile communications, such as, but not limited to, a numeric identifier of the phone, such as a phone number or SIM card, by way of non-limiting example. As will be readily understood by those skilled in the relevant arts, "overhead" in such context can be implemented in the form of header and/or other control data associated with data records, and/or streams of such records, used in inter-device communications processes, including for example packet communications processes.

Further provided to the server 912, 918, 1306, such as in the aforementioned overhead for processing device communications, may be additional information to allow for identification of the correct action to be provided or taken by the server. Such information may include, for example, an identification of the tag 850 read by the reading device 810, 120. Of course, those skilled in the relevant arts will appreciate that a server associated with a particular address may have stored thereat only one action, in which case identification of the tag or the action to the server may be unnecessary. Likewise, as noted above instructions stored on or referred to by the tag 850 may be programmed such that certain server address(es) are readable only to devices having certain identifying characteristics.

As previously noted, various embodiments and aspects of the disclosure may be implemented using active and/or passive NFC tags 850. As used herein, an active NFC tag is capable of operating pursuant to its own power. Conversely, a passive tag 850 is one that operates responsive to the providing of power from another NFC-capable device, as for example an electromagnetic field provided by a reader device. Tags 850 may also be switchable between active and passive, such as responsive to the presence of a particular reader 810, 120in proximity to the tag (i.e. a tag may be active in order to allow for increased data downlink when acting as a private tag 850 in the presence of a programming device 810, 120, i.e., a private, read/write authorized device, and the same tag may act as a passive tag having decreased data downlink capability in the presence of a public-authorized read/write device).

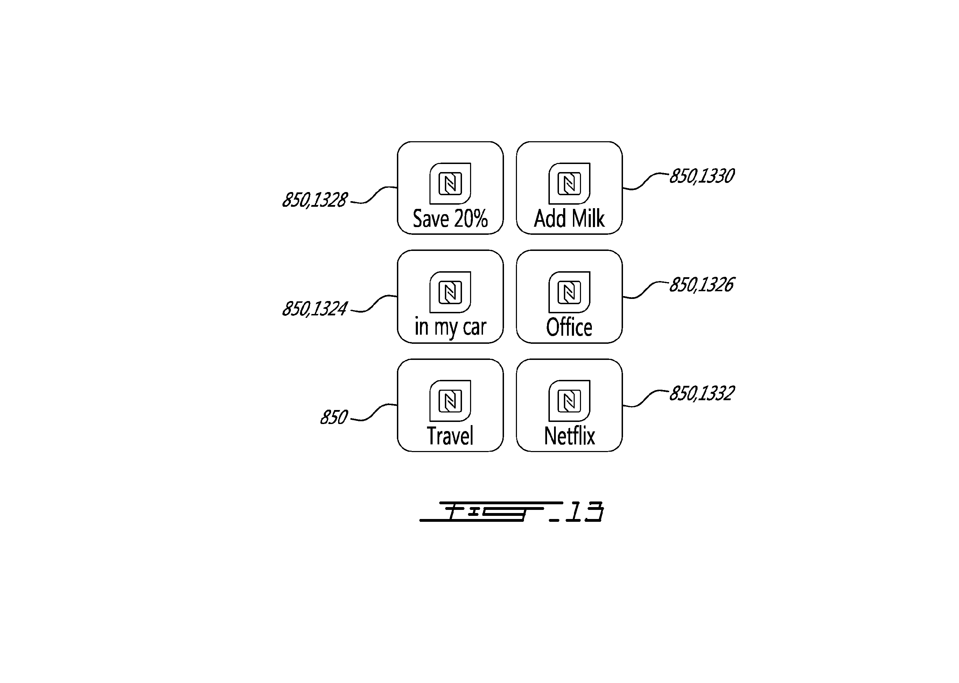

Tags 850 used with the disclosed embodiments may be provided, or distributed, to users/owners/programmers by any suitable means. For example, they may be sold individually or grouped, such as individually or in groups offered for a particular purpose. For example, particular tags or groups of tags may be optimized for offering certain volumes of data storage and/or interactions, and/or for the capability to have different allowable actions obtainable, as for example from a cloud server 912, 918, 1386 corresponding to a server address or reference provided by a particular tag. For example, in embodiments wherein processes suitable for use in promoting social interactions are to be enabled by the tag, the subject tag 850 may be designed or otherwise configured to offer suitably-configured such social-based actions by itself, e.g., from its own local storage, and/or may be designed and priced to allow for efficient communicative linkage to a cloud server 912, 918, 1386 that offers or otherwise supports social-based or -oriented actions. **FIG. 13** illustrates a "multi-pack" of tags that may be sold together as a group for a variety of purchases, by way of non-limiting example.

Embodiments of tags 850 such as those shown, for example, in Figure 13 may be suitable for programming, e.g., for any and/or all types of data read/write operations, by consumers. For example, an employed, socially-active homeowner might purchase a package of such tags 850 and write to one or more of them various forms of content, machine-readable instructions, and other types of data, including for example identifying information and/or data suitable for controlling authorized access to data stored on the tag. For example, the employed, socially-active homeowner might program (i.e., write data to) a first tag 850, 1324 to include combined instructions and contents suitable, upon being read by the homeowner's device 810, 120 for causing the homeowner's device 810, 120 to access a social interaction account on a server 912, 918, 1386, such as a Facebook or Twitter account, and display on the user's homepage a notification that "I am in my car driving." The user could then affix the tag 850, 1304 to a suitable location in his/her automobile and upon entering the vehicle, or at other desired times, might initiate an NFC data interaction with the device 850, 1304 to cause his/her device 810, 120 to initiate any desired action(s). Reading of the tag 850, 1324 could cause a wide range of other actions to happen as well, in addition or in the alternative. For example, as explained further below, reading of the tag 850, 1324 could cause the same or another device 810 associated with the user to shift from one user preference profile to another, for example from a "current," "at home" or "at office" profile to a "traveling," mobile," or "in the car" profile. Such profile can, for example modify or confirm network connection preferences, communication type preferences, alarm or alert preferences, etc.

Similarly, a tag 850, 1326 might be programmed and placed so as to cause the user's device 810, 120 to take any desired action(s) upon arrival at or departure from the office, home, or other location. An example of an advantageous use of suitably programmed tags 850, 1326, 1328, 1330, etc., is the use of them to manage a user's device 810, 120. For example, by suitably programming a plurality of such tags by, for example, storing on them various sets of executable and/or content data sufficient to enable a processor 8180 of a device 810 to manage user preference or other control profiles on the device 810 for different purposes, the tags may be used to optimize efficiency in the use of such devices.

For example a user of a device 810 might program one such tag for a personalized or otherwise preferred 'sleep', or 'quiet' profile, and place the tag on a wall, bedside stand, etc., so that at bedtime the user might cause the device 810 to read the data and execute a profile-update application to turn off all desired alerts, etc., so that receipt of telephone calls, e-mails, text messages, and/or calendar reminders to does not initiate an audible alert that might disrupt the user's sleep. Similarly, a suitably-programmed tag might be placed at the user's office to enable the user to rapidly and conveniently place the device in a desired profile state for use at the office. For example, telephone calls directed to the user's device 810 might be forwarded to his/her office telephone number, and/or other desired number, such as a preferred voice mail system.

In other embodiments, one or more tag(s) 850 may be programmed to send data to a device 810 when the tag is read which will refer the device 810 to an associated locally or remotely stored instruction which may cause the device 810 to, for example, generate and automatically send one or more e-mail(s), instant message(s), and/or other communication(s). For example a user might place a tag 850 at home, and/or at the office, and upon arrival at home or office cause his or her device 810 to read data on the tag 850 which causes the device to access an associated instruction to access, generate, or otherwise define or identify an e-mail, instant message, or voice mail or other audio message to one or more other defined device users. For example, a husband might program such a device 810 with data representing instructions which, when a particular tag 850 is read by his device 810, cause his device to automatically invoke an e-mail or instant messaging application 8130N, generate or otherwise identify a message informing his wife and/or child(ren) that he has returned home, or arrived at the office.

As will be understood by those skilled in the relevant arts, a single tag 850 may be used to cause different devices or groups of devices 810 to undertake different actions automatically, or semi-automatically, when read. For example, at tag 850 located in a home may, when read by a child's device 810, invoke an associated locally-executed instruction to send a message to his/her mother, reporting that he/she is home using an instant message application resident on the device 810. The same tag, read by the mother's device, may refer the device to a remote home-management application to change a home security profile (e.g., turn off a burglar alarm) and a messaging application to generate an e-mail to her husband, instructing him to bring home one or more items from the grocery store. In some embodiments, the actions invoked by a device 810 (either remotely or locally) when a particular tag 850 is read may be set and/or re-set by a user of the device 810 according to their preferences. This may be done, for example, by setting or changing an instruction locally in the device 810 or by changing an instruction stored remotely to which the device 810 will refer when a particular tag 850 is read. In some embodiments, a user interface may be made available to facilitate creating and storing such instructions locally on a user's device or remotely, such as on a cloud server.

In some embodiments of the invention, such profile management and/or other automated functions may be performed using QR codes, bar codes, or other image-based 'virtual tags 850'. For example, an office or other worker can be presented with a virtual QR code upon booting up his/her computer, based for example on location and/or time of day, etc., and upon scanning such virtual tag using camera or other image capture (sub)system 8240 in lieu of or in addition to NFC (sub)systems as described above, can initiate profile setting processes as described above.

As will be understood by those skilled in the relevant arts, tags 850 programmed in the manner described for tags 1304, 1306 might, through the application of suitable authorization means, allow data write access solely to the owning user's device 810, 120, and on that basis be considered as 'private' tag(s), with data communications transactions caused by instructions stored thereon being considered 'private' actions.

Similarly, tag(s) such as 1328 and/or 1330 might be used by a vendor in a store for storing data representing content and/or executable instructions suitable for causing a shopper's or employee's device 810, 120 to implement savings on one or more items selected for purchase (e.g., to act as an electronic coupon to allow a 20% savings on purchase of a particular item, or group of items), or to add to a shopping or purchase list one or more particular items such as "add milk." Because such tags, and action(s) associated with them, might be available to all compatible consumers' devices brought into the store, they might be considered 'public' tags and actions. Alternatively, such data and/or actions might be available only to a selected subset of shoppers, such as those who have registered with the store or its owners, and therefore might be considered 'semi-private.'

Mixed 'private,' 'semi-private', and/or 'public' tags may also be created, each storing multiple content and/or instruction data sets, accessible by various groups of users, and used in a very wide variety of contexts. For example, one or more tags 850, 1332 might be programmed by a user to allow private, semi-private, and/or fully-public access to content and/or instruction data stored and/or otherwise administered by a social media website server 912, 918, 1306, and thereafter posted around town, so that general messages for the passing, interested public might be accessed by any NFC-capable device(s) 810, 120; semi-private messages for groups such as subscribers to the social media service; and one or more private messages for one or more user or "friend" groups.

Varying levels of access to private, semi-private, and/or public tags can be controlled by any suitable means. For example, various forms or types of encryption may be employed, with keys adapted to allow only desired sets or subsets of device(s) 810 to access data stored on any one or more tag(s) 850. As an alternative or additional example, read access to some or all data stored on any one or more tag(s) 850 can be openly available to any reader device(s) 810, with access to remotely-stored actions, instructions, or content data being restricted by, for example, corresponding servers, using subscriber or other authorized-reader or access-control list(s).

Of course, data stored on any or all such tags 850 may be updated or otherwise modified later by authorized devices 810, 120, as disclosed herein.

Further, by way of non-limiting example, if a tag 850 is to serve a simplistic purpose, such as pointing reading device(s) 810, 120 to access a cloud server 912, 918, 1306 that responds by providing real time, in-store price updates to be read by public readers in a department store, then the tag 850 may be offered and/or priced to only provide a server address to a reading device such that it can connect to a cloud server 912, 918, 1306 associated with that address which is capable of recognizing that such tag is solely for enabling an action passing pricing information stored at or in association with the cloud server by the tag owner back to the public reading device. More particularly, for example, such "price tag" tags may accordingly be lesser in price at tag purchase than other available tags. As such, tags made available in accordance with the present disclosure may be differentiated by tag price, tag type, tag purpose, or the like.

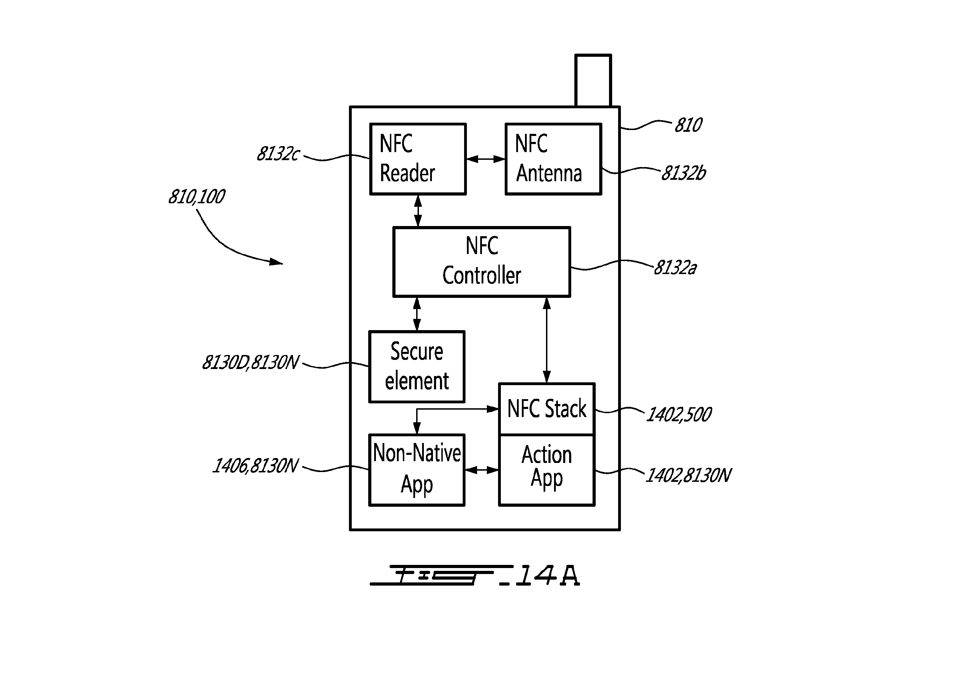

Returning now to **FIG. 11**, illustrated is a schematic network diagram showing a network that may include a plurality of mobile devices 120, 810a, 810b, 810c, at least one NFC tag 850, and a communicative connection from at least two of the reading devices 810a, 810b to at least one cloud server 1306. The mobile devices of FIG. 11 may be any mobile devices known to those skilled in the art, such as those discussed above, and particularly, by way of non-limiting example, a Blackberry smartphone 810, provided by Research in Motion Ltd. As shown in Figures 8 and 14A.

In the embodiment shown in **FIG. 14A****,** the mobile device 810 includes NFC reading capabilities 8132, such as an NFC antenna 8132b, an NFC tag reader 8132c communicatively connected to the antenna, and an NFC controller 8132a communicative with the NFC tag reader, as discussed above, and further may include one or more action application ("action apps") module 1404, 8130N communicative with the NFC controller 8132a, and aspects of the device via the NFC stack 1402, 8116, 8118, which action app comprises logic suitable for use by controller 8180 and/or 8132a in interpreting coded instruction data sets read from a device 810, 850, etc., and directing actions that are to be executed by the device 810, 120, by its components, and/or by software aspects associated with the device in accordance with such coded instruction sets. Action app(s) 8130N, 1404 may be of any type compatible with the purposes disclosed herein; for example, such app(s) are typically capable of reading at least broadly public tags, and may be capable of reading and programming private and/or semi-private tags, as discussed herein throughout. Such action app(s) may be incorporated as a component of, or may be communicatively associated with, NFC controller(s) 8132a, and accordingly may understand content, control data, scripts and other data sets received or otherwise accessed from, and/or may be enabled to communicate any or all of such data type(s) and other instructions to, one or more NFC tags 850. As such, action app(s) 1404,8130N may be, for example, embedded and/or native device apps. In some embodiments, native app(s) may offer enhanced security in the communication of actions from the cloud server, as discussed further below.

Alternatively, NFC app(s) may be a non-native, i.e., "third party," app(s) 1406, 8130N for interacting with the device's NFC controller. By way of non-limiting example, Web Works® by Blackberry may be employed to generate or otherwise cooperate with, support, or enable execution of non-native apps capable of discerning, reading, interpreting, data sets, and optionally executing instructions, or scripts detected by the NFC reader 810 and provided via the NFC controller 8132a to the non-native app 1406, such as responsive to action app(s) 1404, for execution, such as by interaction between the non-native app and a native app (such as Web Works), of actions indicated by the scripts. As such, in particular embodiments an action app 1404 that provides an action may be native to the device 810, or may be downloaded by the device, such as based on a download action received from a cloud server 912, 918, 1306 responsive to a reading of the subject tag 850.

Accordingly, device actions may be indicated or otherwise enabled by both native and non-native action apps. By way of non-limiting example, a native app 1404 may receive data read from an NFC tag 850, may be pointed ('referred") to a cloud server 912, 918, 1306, in accordance with the herein described systems 400 and aspects of mobile device 810a, and may receive from the cloud server an indication that the directed action requires access to a third party app 1406 not found on the reading device. A native app 1404 may be preprogrammed, in such circumstances, to undertake the action of indicating to the user, e.g., by means of suitably-configured GUI(s), that the required app for the directed action is available only via download, and to undertake the action of eliciting from the user an indication of whether the user wishes to download the non-native application. Thereafter, upon agreement of the user to download the non-native application, the cloud server may direct the device action of the agreed-to download, pursuant to which the device 810 may download the non-native application. Further, following such download, the device 810 may take further action, as directed for example by the cloud server 912, 918, 1306 and as comprehensible to the device via the non-native app.

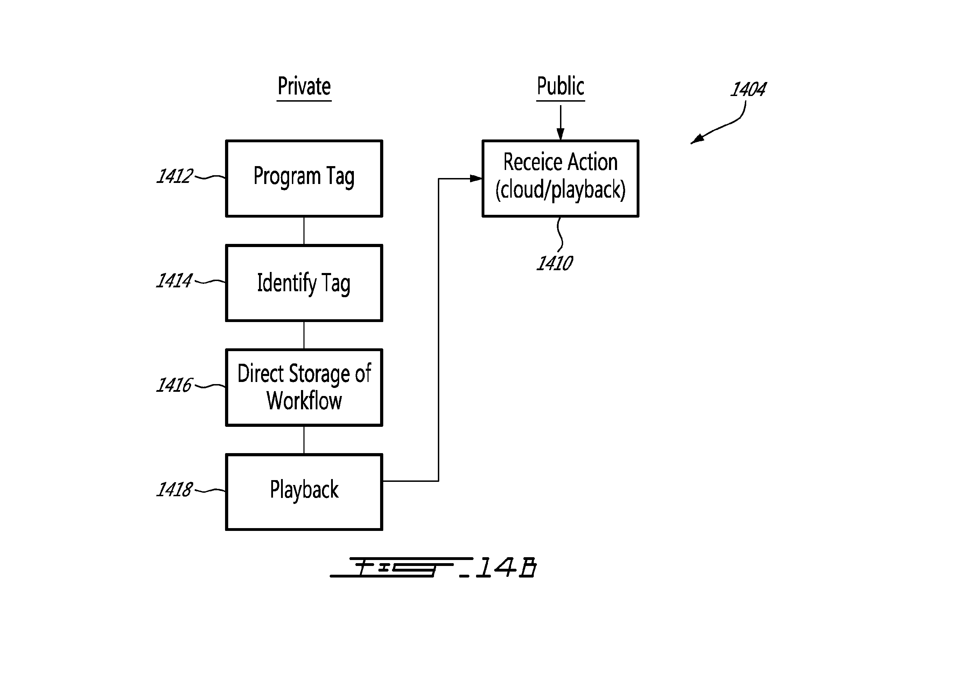

A block diagram of action application logic 1404 suitable for use in implementing the disclosure is illustrated in **FIG. 14B**. An action application 1404 on the device 810 may receive, or otherwise access, at block 1410, data (e.g., coded instructions) corresponding to an indicated action, such as a public action, from the cloud server 912, 918, 1306 based on a direction to obtain an action from that specific cloud server address from the at least one NFC tag 850. Further, the action app 1404 may allow, at block 1412, for read/write operations including the initialization of, configuration of, programming of, reprogramming of, and/or authentication of, the tag. That is, the action app may allow an authorized device 810, such as via the NFC controller through the NFC reader and the NFC antenna 8132a-c, to interact with a tag as a private device to "create" the tag, i.e., to code or program to the tag with at least a cloud server location (i.e., a reference or pointer) to which public users using reading devices which thereafter access the tag will be pointed. Thereby, the tag 850 may be authenticatable, such as upon identification at block 1414, as having been created or modified by the particular authorized device 810, such as a device authorized to point public users to a particular cloud server; and the action workflow corresponding to the authenticatable tag so created may, of course, be stored, at block 1416, on the device, or may be stored from the device to the cloud server, or may be stored both on the device and on the cloud server.

Further, in such tag creation/modification embodiments, "playback" of actions (public and/or private) programmed from the private reading device to correspond to the tag may be reviewable and/or executable on the authorized device 810, 120 using the action app at block 1418. For example, a tag 850 may be programmed to point an NFC-capable device 810 to a cloud server location 912, 918, 1306 corresponding to a particular action based on communicative interaction(s) between the action app on the NFC device and the tag when the NFC device is in tag creation mode. The user may thereafter switch the action application to private reading mode, at which time private actions, if created by the user, may be available for review by the user. The user may also switch the device to a public reading mode to review public actions, if created by the user. Alternatively, the user may be enabled to access a "playback mode," in which mode any actions, whether public or private, may be reviewable by the user.

Further, as referenced above, the action application 1404 engaged in tag creation, playback, and/or use, and actions for the device generated by the action app, may be generated via open application programming interfaces (APls), such as the Blackberry WebWorks provided by Research in Motion. More particularly, a developer's kit, such as the aforementioned WebWorks (for html5), may provide APls capable of accessing native (and non-native) device signals and information, including, in some embodiments, signals and information that are more sensitive than those signals and information typically exposed via standard Web APls. Such signals and information may include, by way of non-limiting example, email, contacts, calendar, etc. Accordingly, in exemplary embodiments discussed herein, a downloaded action to a device may comprise a script that, upon receipt by the device, accesses the signal or information exposed by the API(s) to cause the device to perform the action.

More particularly, an action app 1404 may include, as an aspect, a framework for writing, or selecting from one or more templates, action scripts for execution or other use by publicly-authorized devices 810, 120, etc. Likewise, third-party app(s) 1406 may be provided in accordance with this framework, and may thereby provide actions that access aspects of the device per native action app(s) 1404. Further, templates may include or otherwise provide or enable use of scripts previously employed by a private device, or scripts for standard use by all suitably-authorized private devices, or by a subset of all private devices meeting particular criteria, such as certain identifying hardware or software characteristics, or associations. Likewise, customized scripts may be provided. In particular exemplary embodiments, it may be that customized scripts may be solely provided, or at least preferably provided, via a desktop action programming interface implemented for example on a device 914, 810, due at least in part to the ease of programming via such a desktop action programming interface. It goes without saying that a desktop action programming interface may also be used to emulate action scripts, whether customized or templatized.

In such embodiments, security may be readily provided. For example, based on the information exposed or otherwise processed or controlled by a particular API, a public user may be asked whether that user is certain he/she wishes to communicate such information, with associated risk of exposure. Correspondingly, security may protect a reading device based on the type of action script, and/or the provider of the action script, by way of non-limiting example. Accordingly, a user may be enabled, for example, such as via an indication provided by an action app 1404, to always accept actions of a certain type, or from a certain action provider.

Thereby, real-time "reprogrammable" actions may be created and stored on a cloud server, and thereafter accessed from the cloud server, directly to and from the cloud server. This storage to and access from the server of the actions may occur responsive to an interaction with a programmed tag by the device, in a reprogrammable manner and using native action apps and/or exposed native APIs, and/or non-native action apps and/or exposed native APIs developed using a developer's kit.

Also illustrated in **Fig. 11** is at least one NFC tag 850. In some embodiments, an NFC 850 tag supports limited programming. More particularly, in passive tag embodiments, although capable of supporting discreet URL (Uniform Resource Locator) addressing, prior NFC tags are not capable of carrying myriad, reprogrammable actions that can be reprogrammed as many times as desired, due in part to hardware limitations on coded modifications made to the NFC tag. In addressing this issue, the at least one NFC tag described herein points a user to the network address of a server which provides such flexibility in actions provided and reprogrammability not available in prior NFC systems.

More particularly, and as referenced above, the NFC tag 850 in the exemplary embodiments may be any tag known to those skilled in the art, including but not limited to NFC tags, radio frequency identification ("RF ID") tags, 2D barcode tags, 3D barcode tags, QR code tags, holographic tags, or the like, that are capable of storing in formation in volatile, non-volatile, and/or printed format, and of being read by a reading device 810 (using for example NFC (sub)system(s) 8132 and/or imaging (sub)system(s) 8240, and thereby providing to the reading device, for example, a cloud server address wherefrom the reading device can access one or more device-based actions from the cloud server having that address. Exemplary embodiments of NFC tags used in the instant disclosure may further provide one or more security capabilities, as discussed below. Certain of the security aspects discussed below will be understood by those skilled in the relevant arts to be best operable with only certain kinds of NFC tags, such as most particularly with NFC and/or RF ID tags, such as due to the fact that many other types of tags may be reprinted, whereas NFC or RF ID tags cannot be reprinted.

Further, and as noted above, NFC tags 850 suitable for use in implementing the disclosure may include private, semi-private, public, and/or hybrid NFC tags, or combinations thereof. For example, an owner, creator, or programmer of a tag 850 may be recognized based on identifying communication characteristics of his or her self, or his or her device 810, 120, particularly in the case the tag was programmed using that device. Such recognition as the tag is read by the reading device may allow for the providing of a private action from the cloud server to the reading device. More particularly, the recognition of the reading device may provide a secure key that unlocks the private action provided from the cloud, and/or may provide a secure address on the cloud server from which the private action may be provided to the reading device. Specifically, a reading device brought into proximity of an NFC tag programmed using that reading device may access from the cloud an action, and in so accessing may be given a cloud server address available only to that programming device. Thereby, only from the server having that particular unique cloud server address, the private action may be made available to the private reading device. In preferred embodiments, such a private action cannot be obtained and/or decoded from the server having the address provided by the tag by a public reading device, i.e., by a device other than that of the tag creator, owner, or programmer.

NFC tags 850 may also be public tags. A public tag may for example provide a cloud server address, or other pointer, or reference, to a reading device, whereby the reading device may obtain a public action from a cloud server associated with that address.

A public action, as discussed herein, is any action available to a broader group of devices, such as a non-owner, non-creator and non-programmer of the NFC tag read. However, public actions resident at the cloud server may nevertheless be provided only to particular public reading devices, to the extent such reading devices may be uniquely identified when brought into communication with the NFC tag (either at the tag or by the cloud server). As a further example, a creator of a hybrid tag may provide two actions to the cloud server, wherein a first action is available to anyone reading the tag, such as a reference to "Like" a particular cause on Facebook. The second action may be made available only to a more limited group, such as public reading devices identified by the creator of the NFC tag as friends of the creator on a social application such as Facebook. For example, such friends of the creator may be enabled to perform any desired or otherwise authorized actions, such as being provided with direct links to donate money to the cause of the creator by executing a password driven or single action monetary transaction, such as through a device based account, such as a Blackberry account, or to "post" or otherwise upload messages concerning a specific subject, location, or person. Those skilled in the relevant arts will appreciate, in light of this disclosure, the exemplary embodiments may likewise be used in the performance of polling, surveys, ratings, and the like, or for any other desired purpose, as actions delivered to public reading devices.

Tags 850 comprising data accessible by more than one level of authorization - e.g., at least two of public, private, semi-private - may be referred to as 'hybrid' tags.

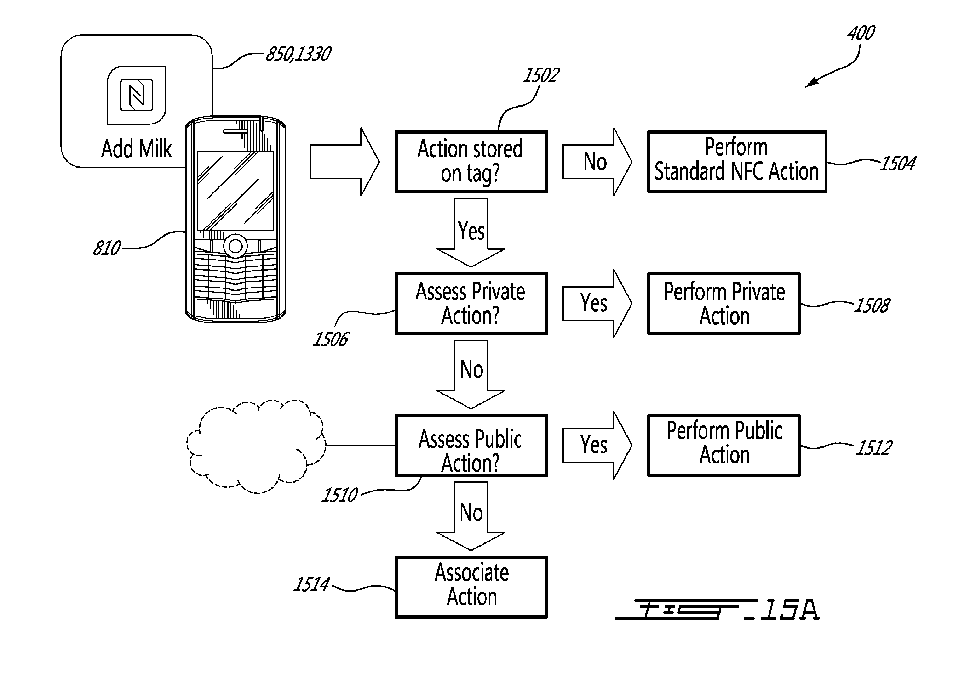

FIG. 15A illustrates a schematic flow diagram, in the form of a decision tree, of a process implemented for example by one or more processors 8180, 8132a, 8158, etc., of a device 810 in communicating with a tag 850, 1330 as disclosed herein.

Having established a communication session with the device 850, 1330 as for example through a tap or 'kiss' procedure described herein, or by placement of the device 810 within sufficiently close proximity for a Hall effect or other proximity sensor 726 to initialize an NFC communication (sub)system 8132 as disclosed herein, the device 810,120 reads and/or otherwise accesses one or more sets of data stored on or otherwise provided by (as for example through a bar code or QR code) the tag 850, and interprets the read data, for example by decrypting it, parsing it into any control, content, and/or executable data set(s), and determining by various comparisons what type of action the data is intended for.

As previously noted, access by the device 810 to some or all data stored on the tag 850 may be subject to authorization at one or multiple levels by means of password(s)/and user ID(s); suitable implementation of public/private key or other forms of encryption; server-maintained authorized device user lists, etc.

As a first step, for example, at 1502 the device 810 can determine whether any or all data read from the tag 850 corresponds to an action, and if so whether it conforms to any one or more standard (i.e., generic, operating system, or other broadly public) NFC actions, such as initialization of communications processes, display of image or text and/or other media content stored on the tag or stored by one or more servers 912, 918, 1306, etc., referenced by data stored on the tag. If such data corresponds to such standard action(s), at 1504 coded instructions executable by the device 810 can be accessed, from memory(ies) on the tag 850, device 810, the device 854, another device 810, and/or one or more networked applications or other resources accessible at 912, 918, etc., and executed accordingly.

If some or all data read from the tag does not correspond to any standard NFC action(s), at 1506 processor(s) 8180, etc., the device 810 can further parse and/or otherwise interpret the read data to determine whether the read data corresponds to personalized, or private (including semi-private), action(s), which may be locally-executable functions executable by modules and/or applications or other resources resident on the reading device 810, and at 1508 may execute such action(s) accordingly. Interpretation and execution of such private or "personalized" action(s) may be conditioned on satisfaction of one or more distinct sets of authorization conditions, so that the personalized actions will be interpretable and/or executable only by authorized device(s) 810. Again, executable instructions, and optionally any desired or required authentication information, corresponding to or otherwise useful in executing such actions may be accessed by the device 810 from memory(ies) on the device 810, the device 854, another device 810, and/or one or more networked applications or other resources accessible at 912, 918, etc..

That is, the device 810 may assess or otherwise interpret a private action intended specifically execution by that device, such as for enabling an owner or administrator to write data to or otherwise program the tag 850; or the device may assess or otherwise interpret information on the tag that indicates a private action specifically for that device is already corresponded to the tag information on the device; or the device 810 may assess or otherwise interpret that the tag 850 points the device 810 to an address or other network resource associated with a particular cloud server 912, i.e., refers the device to a networked resource 912, 914, etc., from which the device is to obtain or otherwise access a private action (a private networked application resource) as the tag creator/tag owner. If a private action is determined to be present on the device 810, i.e., locally executable, at step 1506, it is performed at step 1508.

At 1510 the device 810 can further parse and/or otherwise interpret any remaining read data to determine whether such data corresponds to more broadly-accessible, cloud-based or otherwise associated with networked application(s) or other resources, "public" actions and at 1512 may point and/or otherwise refer the device 810 to such action(s) for execution accordingly. For example, data read from a tag 850 may comprise reference data which, upon interpretation by processor(s) 8180, etc., can point the device 810, 120 to one or more networked resources 912, 914, 91, 1306, etc., to read and/or otherwise access data, including any desired executable instruction sets, and execute corresponding instructions.

Interpretation and execution of such public action(s) may be conditioned on satisfaction of one or more distinct sets of authorization conditions, so that the personalized actions will be interpretable and/or executable only by authorized device(s) 810. For example, all some or all authorized members of a user's group of a web-based social function application, or all subscribers to a telephone or other service may be authorized to access and execute actions according to instructions interpreted at 1510. Again, executable instructions, and optionally any desired or required authentication information, corresponding to or otherwise useful in executing such actions may be accessed by the device 810 from memory(ies) on the device 810, the device 854, another device 810, and/or one or more networked resources 912, 918, etc..

For example, in various embodiments, if no private action is assessed (i.e., interpreted) at step 1506, the device may be pointed or otherwise referred to a cloud server address on the tag to assess a public action at step 1510. If a public action is present at step 1510, the device may receive from the cloud server (i.e., networked resource) and carry out data representing instructions configured to cause the device 810 to execute the action at step 1512. Those skilled in the relevant arts will appreciate that, at step 1514, an action/address may be associated with a tag 850 having no action associated therewith, such as by a tag owner/creator or other administrator, and that such association of an action may occur after no action is found at steps 1506 or 1510; or after authentication at step 1502 but before performance of the remaining steps; or without subjecting the tag to authentication and prior to performing the remaining steps.

If any data read from the device 850 is not interpreted as corresponding to any generic, private, or public action, at 1514 the device 810, 120 can invoke an application 8130A-N, 1404, 1406, etc., to enable a user of the device 810, 120 to assign to the data any desired action(s). For example, one or more GUIs adapted to elicit from the user a choice of a specified set of actions, as for example using pull-down or other menu functions, or device search functions, or to create new actions, may be generated and displayed on any or all of input/output devices 8140, 8112, 8138, 8160, 8134, 726, 8238, 8240, 8106, 8108, 8132, 8101, 8102, 8121, 8110, 8135, 724, etc. For example, shortcuts and/or other instructions suitable for managing user preference or other control profiles for a device 810, a user's household, office, or other appliances, systems etc.; for managing social media; or taking a very wide variety of actions executable by any one or more of devices 810, 120, 850, 912, 914, 918, 1306, etc., in a very wide variety of manners, can be created.

In various embodiments it may, for example, be advantageous for standard NFC actions to be stored, in openly-accessible and readable format, on tag(s) 850, so that they are executable by all NFC protocol compliant devices. Actions restricted to execution by specific platform types (e.g., devices produced by a common manufacturer, or limited to specific makes/models, etc.,) can be stored on individual device(s) 810, or groups of them; and actions available to all users, or various restricted sets thereof, may be stored on one or more server(s) 912, 1306, etc.

Thus, for example, in various aspects and embodiments, the disclosure provides systems 400, devices 810, 850, 912, 914, etc. useful for enabling one or more wireless handheld communication devices 810, 120 comprising at least one near field communication (NFC) system 8132 operable for data communications with at least one other NFC-capable device 810, 850; at least one wireless network communication system 8103, 8101 operable for wireless data communications with at least one computer network; and at least one processor configured 8180, 8132, 8158, to cause the NFC system to read from at least one other NFC-capable device a data set, to interpret the read data set, and if the interpreted data set comprises one or more instructions executable by an application resident on the handheld communication device, cause the application to execute such locally-executable instruction(s); and if the interpreted data set comprises one or more instructions identified as referable to a networked application resource for execution, cause the wireless network communication system to send such referable instruction(s) to corresponding networked application resource(s); else, invoke an application configured for enabling a user of the device to associate an instruction with the interpreted data set.

In the same and other aspects and embodiments, the disclosure provides systems 400, devices 810, 850, 912, 914, etc. useful for enabling one or more wireless handheld communication devices 810, 120 comprising at least one near field communication (NFC) system 8132 operable for data communications with at least one other NFC-capable device 810, 850; at least one wireless network communication system 8103, 8101 operable for wireless data communications with at least one computer network; and at least one processor configured 8180, 8132, 8158, to cause the NFC system to read from at least one other NFC-capable device a data set 310, to interpret the read data set 310, and for each instruction, if any, associated with the interpreted data set that is executable by an application 8130 resident on the handheld communication device, cause the application to execute such locally-executable instruction; and for each reference, if any, comprised by the interpreted data set that is associated with a networked resource, cause the wireless network communication system to access the referenced networked resource 912, 918, 1306, 1524, etc.

Optionally, or in addition, devices 810, 850, 912, 914, etc. in accordance with such aspects and embodiments can be configured, if the interpreted data set comprises no instruction that is executable by an application on the handheld communication device and no reference associated with a networked resource, to invoke an application configured for enabling a user of the device to associate an executable instruction with the interpreted data set.

The disclosure further provides such systems 400, devices 810, 850, 912, 914, etc. configured such that, if the interpreted data set comprises a write authorization associable with the handheld device, the device 810 can invoke an application configured for enabling the device to write data to the at least one other NFC-capable device a data set.

The disclosure further provides suitably-configured systems, subsystems, components, devices, software, and GUIs adapted for implementing the various processes and combinations disclosed herein.

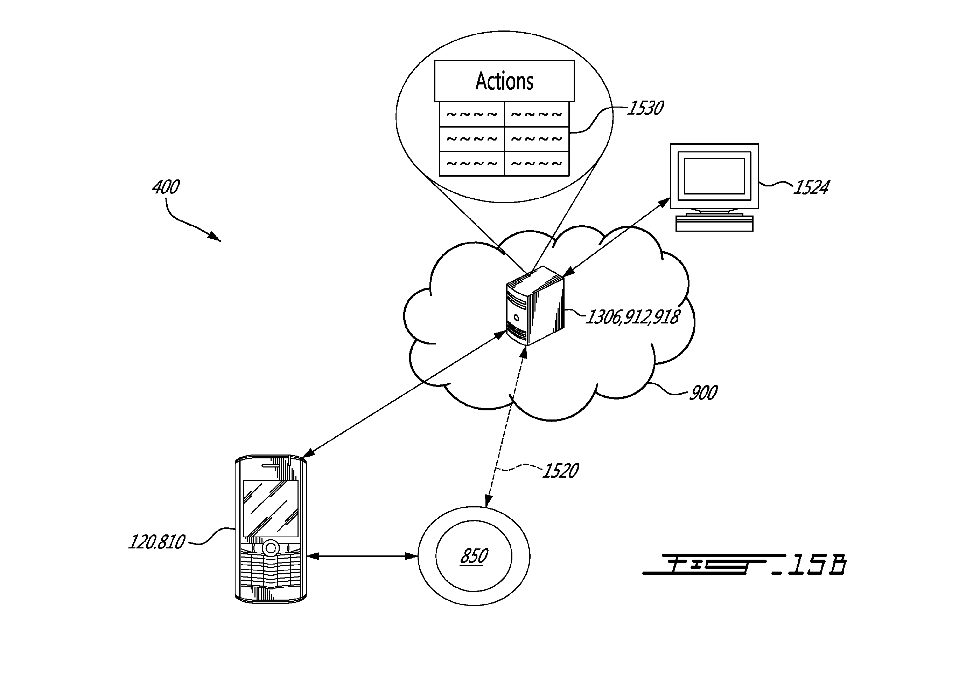

Figure 15B illustrates an embodiment of a system 400 suitable for use in enabling a user of a device 810, 120 to invoke an application 8130A-N, 1404, 1406, etc., to assign to or otherwise associate with data stored on any one or more tags 850 any desired action(s). In the embodiment shown in **FIG. 15B** an indirect, "pseudo-connection," or pseudo-link, 1520 is provided between an NFC tag 850 and a cloud server 912, 918, 1306. As those skilled in the relevant arts will understand, once they have been made familiar with the disclosure herein, a reconfigurable public, semi-private, and/or private action may be fetched by a reading device 810 from a cloud server 1306 based on a stored NFC tag's pseudo-link to that cloud server. An owner, creator, programmer, or other administrator of such an NFC tag 850 may accordingly purpose or repurpose one or more reconfigurable actions indicated by the NFC tag link to the cloud server in a separate interaction with the cloud server, as illustrated in FIG. 15B. Thereby, an NFC tag in accordance with the exemplary embodiments of the disclosure may be programmable, or reprogrammable, any number of times using such pseudo-connection(s) from the tag to the cloud server address that will actually direct the actions to the reading device. More particularly, a tag owner 1522 may have, such as on the device of the tag owner or administrator in the action app 1404, 1406, or via a web- or other network-based computing interface 1524 to the cloud server 1306 as shown, the capability to interact with the cloud server location to reprogram actions directed by the cloud server location to reading devices. Accordingly, the tag owner may program, reprogram, or otherwise control, via one or more pseudo-links 1520 to the tag 850, the actions directed to a reading device upon reading the tag.

By way of non-limiting example, an owner or other administrator of a tag 850 may have access, such as through a suitably-configured administrative graphical user interface ("GUI") to the action app 1404, 1406 or a GUI to a web interface, and as a creator or other administrator of the tag, to listings, tables, or the like 1530, of actions correspondent to tags programmed by that owner and pseudo-linked to the cloud server or servers to which the GUI of the tag owner offers access. Such tag listings may be tied, for example, at the cloud server 1306 to a password-protected or otherwise secure account of the tag administrator, to an administration device 810 or devices owned or otherwise controlled by the owner or administrator, or the like.

More particularly, from action listing(s) 1530 stored on or otherwise accessible through a cloud server 1306, an administrator can use pseudo-link(s) (1520) to configure or reconfigure actions provided by the cloud server 1306 to any and/or all reading devices 810 which have established communications connectivity to corresponding public tags 850, or authorized reading devices that come into proximity to the tag(s). Those skilled in the relevant arts will appreciate that listing(s) 1530 tags may be provided to administrator(s) in such manner that the owner may readily distinguish particular tags or groups of tags for programming or reprogramming purposes, i.e. it may be preferable that the administrator be able to program not only a single tag, but also groups of tags meeting selected criteria, wherein the selected criteria provide distinguishing characteristics over other tags such that the particular tag or group of tags may have associated therewith different actions than other tags not having the selected criteria. For example, tags may be delineated by geography, such as a region or a store location; tags may differentiated alphabetically; or may be differentiated by time programmed; or may be differentiated by tag value; or may be differentiated by tag purpose or service provided; or may be differentiated by allowable public reading device; or may be differentiated by action indicated, or may be differentiated by a creating reading device, or a group of creating reading devices; and/or by group(s) of authorized readers, by way of non-limiting example.

As used herein, "actions" indicated by the cloud server include executable instruction sets such as scripted directions understandable to a reading device that direct the reading device to perform certain functions, in hardware, software, or firmware. For example, in addition to the examples discussed above, actions may include scripts that initiate the playing of music or other audio and./or audio-visual media, presentation of text and/or images, the instantiation of a particular website or app, the blinking of an LED, the generation of sounds, or the like.

By way of example of an action, a number of employees may have public tags in their respective offices. When the supervisor of those employees departs on work-related travel, the supervisor may uploada dictated set of assignments due from his employees while he is out of the office. Further, one of the assignments may have corresponded thereto a Microsoft PowerPoint presentation. Moreover, another of the assignments may have associated therewith a scheduled conference call. In this example, when the respective devices of the employees are brought into proximity with or otherwise establish communications connectivity with the tags in their respective offices, each of the employees may be provided, on his/her device, with the supervisor's dictation of the assignments due while the supervisor is out of the office. Further, the cloud server may indicate a device action wherein all devices receive and play the entirety of the dictation, or, rather than all employees receiving the same dictation, the cloud server may obtain recognition of each device and correlate that to each employee, such that each employee's devices may play only that portion of the dictation relevant to him/her.

Additionally, a device 810, 120 associated with an employee having an assignment relevant to a PowerPoint presentation may receive an action of playing the supervisor's dictation directed only to her, and simultaneously the device may receive the action of opening the Microsoft PowerPoint (which is received from the cloud server) and displaying the PowerPoint presentation. Further, the PowerPoint presentation may be corresponded to the dictation when the data for each is received, i.e., the received action for the device may include a synchronization command(s) for the dictation data and the PowerPoint data.

An employee who is to participate in a conference call may have his device begin an audio play of the assignments due, and may further have his device generate a calendar entry that auto-populates with the information regarding the conference call that he is to attend while the supervisor is out of the office.

Of note, in particular exemplary embodiments, the aforementioned actions are not realized by scripting stored on the tag, nor by code on the device that recognizes the scripting on the tag as correspondent to an action stored in the device code. Rather, the actions are obtained from the cloud server(s) 912, 918, 1306 to which the tag refers the reading device. However, those skilled in the relevant arts will appreciate that, if active tags or like tags having sufficient storage are used in the embodiments, some or all public actions may be stored on the tag. However, in such embodiments, it may be that reprogramming of the tag must be performed at the tag, whereas a remote reprogramming capability from a cloud server may be particularly preferred instead.

As such, in some or all of the foregoing examples, it may be preferred that any modifications, i.e., reprogramming of actions, needed from the supervisor during his time out of the office be readily effected by brief interactions by the supervisor (and/or by an assistant authorized to access/manipulate/use (i.e., fully or partially administer) his account or an account associated with one, some, or all of the actions that may be manipulated/reprogrammed from his account) with the cloud server, and particularly by modification by the supervisor to the public actions associated with certain tags in the supervisor's tag owner list illustrated in the GUI associated with the supervisor's cloud server account. Thereby, those skilled in the relevant arts will appreciate, in light of the discussion herein, that the relationship between the exemplary tags and the exemplary actions discussed in this example and herein throughout may not only be a one-to-one correspondence from a tag owner account, such as wherein the tag owner has available to him or her only a given action or set of actions residing on a single cloud server; but may additionally or alternatively include: a many-tag-to-one correspondence, such as wherein a series of tags are all given the same address of the cloud server and an identifier or the like of a single action or set of actions on or associated with the cloud server; and a one-tag-to-many actions correspondence, wherein a single tag is referred to a cloud server from which are obtained a series of scripted actions understandable to a reading device. Accordingly, in the foregoing example, the supervisor may be readily enabled to modify the dictation played by devices reading all tags in a single step at the cloud server (many-to-one), or may be enabled to modify the dictation and the PowerPoint for a particular tag in a single step (one-to-many), by way of non-limiting example.

Likewise, based at least in part on the ability to identify at the cloud server particular reading devices as allowable to receive actions, or as having received actions, reading devices may also have an X-to-Y relationship with an action, or with a tag. For example, many devices may be allowed to access a certain action (that is, to access data allowing such devices to execute or otherwise process data related to a coded action) based on a direction from a tag, or only one unique device may be allowed to access that certain action based on a reading of the tag. As such, devices and actions may have a one-to one correspondence, a one-to-many correspondence, a many-to-many correspondence, or a many-to-one correspondence, based, at least in part, on the identity of the public or private reading device. Likewise, the device to tag correspondence may be one-to-one, one-to-many, many-to-one, or many-to-many. (This may be considered another way of describing private, semi-private, or public actions and/or authorizations.)

Additionally with respect to X-to-Y relationships as between tags and actions, actions and devices, or tags and devices, those skilled in the relevant arts will appreciate, for example, that such relationships may allow tags associated with corresponding actions or groups of actions, and actions associated with corresponding tags or groups of tags, to be reprogrammed from the cloud server account of the tag owner(s) and/or administrator(s) at any time. For example, a user or public reading device 810, 120, etc. identified as associated with a tag or an action may be re-identified; a new user or device may be associated with an existing or new action; or an action may be changed or created for identified user/reading device(s) 810, 120, etc. Each such change may occur in real time, at the direction of a tag owner or administrator, through manipulation of correspondences at the cloud server using a suitably-configured GUI interface (e.g., through the private reading device, or through a Web-based log-in, for example). Those skilled in the relevant arts will appreciate that such directions from the owner/administrator may be effectuated in real time or may occur in batch or other optionally timed or delayed mode, as for example pursuant to a triggering occurrence, such as the expiration of a certain time frame, the undertaking of a particular action by a particular device, or pursuant to the occurrence of a particular event, such as the last out of the World Series, or the like. In such embodiments, it may be that action(s) are stored at the public reading device until occurrence of the trigger, or it may be that the action remains at the cloud server, and the cloud server pushes that action via a downlink generated upon occurrence of the trigger, or makes it available for download.

Further, those skilled in the relevant arts will appreciate that tracking and identification of any or all of devices, actions, and/or tags may be performed bilaterally in accordance with the herein disclosed systems and methods. For example, as referenced above, a reading device 810, 120 may identify itself to an NFC tag in order to obtain or otherwise access a particular action or actions. Likewise, a cloud server 912, 918, 1306 may receive an identification of the device requesting a certain action, such as in order to recognize which reading device is to receive the PowerPoint slides in the above example, particularly if the subject device reads a different tag in a different office than the supervisor originally intended. Accordingly, reading of public tags may be tracked at the cloud server, or across a plurality of co-owned and/or co-controlled cloud servers, or the like. This may afford targeted marketing capabilities, such as responsive to knowledge, based on the reading of tags by a certain device, of travel patterns, shopping habits, entertainment preferences, and the like, by way of non-limiting example.

Tracking of reading devices 810, 120 by associated data such as individual and/or group user lDs, serial numbers, account numbers, etc. may further allow for triggering of modifications to available actions for public users. For example, a "scavenger hunt" application may be provided, through execution of which a device 810, 120 obtains or otherwise accesses and executes code representing a given first action in the scavenger hunt by finding a first tag 850, wherein such action may for example include display of content data read from the tag 850 and/or networked device(s) 912, 914, 1306, etc., which data, when displayed, provides direction(s) to a next step or stage in the scavenger hunt, but wherein the device can obtain the next step in the scavenger hunt only after having been identified in or by an associated cloud server 912, 918, 1306 as being the device that obtained the first step in the scavenger hunt. Correspondingly, an order may be imparted to the obtaining of actions by a public reading device, and marketing and sales opportunities may be thereby afforded to reaching the user of the public device, by directing shopping habits, or the like. Further, the foregoing tracking and identification of public user devices may allow for variations in user experiences, such as to avoid a user of a reading device having the same experience on consecutive visits to, for example, a museum.

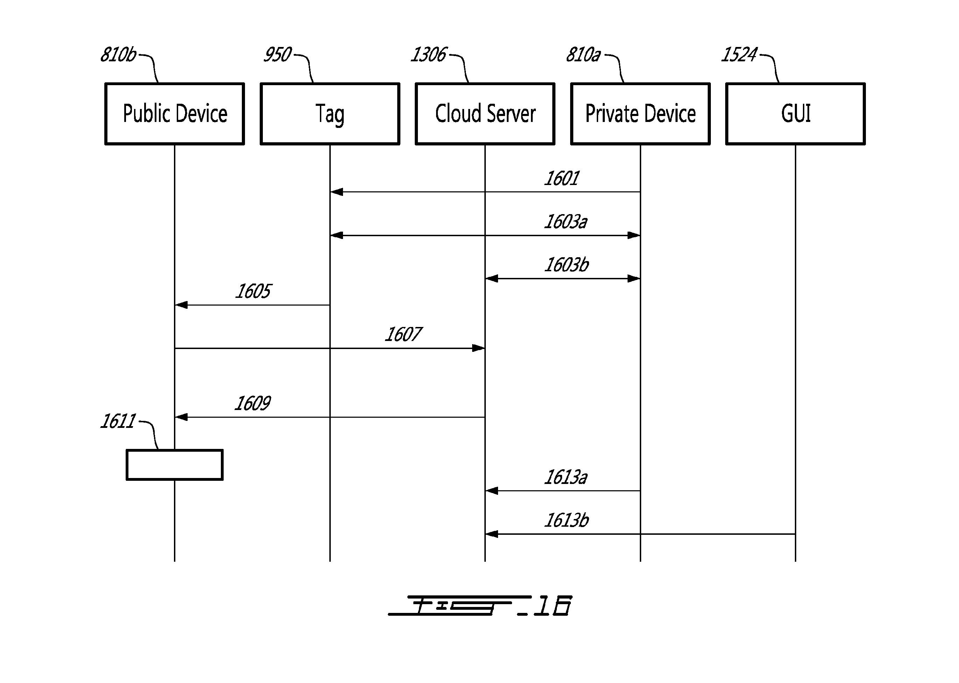

**FIG. 16** is a schematic diagram representing a signal exchange pattern suitable for use in implementing aspects of the disclosure. The exchange pattern shown is, for example, suitable for implementation using networked resource systems / interconnections 400 such as those illustrated in FIGs. 11 and 15B. In the illustrated exemplary embodiment, signaling may be exchanged as between a tag 850 and a programming (private) device 810a, a tag 850 and a public reading device 810b, a public reading device 810b and a cloud server 1306, and between suitably-configured GUI(s) 1524 displayed by and adapted to accept input on behalf of a device 810a and associated with an authorized tag owner/administrator and/or networked resource(s) 912, 914, etc., and the cloud server 1306 (which can also provide pseudo-link(s) between the tag owner / administrator and the tag, as discussed in connection with FIG. 15B).

In the illustrated embodiment, at 1601 a private device 810a signals to the tag 850, thereby "programming" the tag by providing for storage on the tag content / executable instruction data comprising, for example, at least an address associated with the cloud server 1306, and/or an address, location, or other identifier associated with particular actions stored at or otherwise available through the cloud server 1306. At optional exchange 1603a, the private device may read the programmed tag 850, acting either as a private reading device or a public reading device, such as in a simulation mode to confirm programming or reprogramming; and at optional exchange 1603b, the private reading device 810a may receive signaling from the cloud server 1306 responsive to the tag reading in simulation mode.

At exchange 1605, a public reading device 810b reads the tag, and receives therefrom any or all data stored thereon, including for example at least the cloud server address stored at 1601.

Having interpreted the data read at 1605, at exchange 1607, the public reading device 810b initiates a communicative connection, e.g., through a wireless or other network 900, 430, 8141, or otherwise accesses, the cloud server 1306 (and/or action(s) available through the cloud server) associated with the received address(es).

At exchange 1609, the device 810a reads, receives, and/or otherwise accesses indicated action(s) from the cloud server, and at exchange 1611, the device executes the received action by, for example, executing any received instructions and/or or processing any received text and/or media content, etc.

Further, at exchanges 1613a,b, the same or another authorized tag owner/administrator using a device 810a via suitably-configured GUI(s) 1524, which, may for example, be wholly or partially generated and otherwise controlled by any one or more of modules 8130A-N and displayed on a touchscreen 8160, may enter information identifying a secure account on or otherwise associated with the cloud server, in order to program or reprogram action(s) associated with the tag 850.

At exchange 1613a, such account entry is performed from the private device to the cloud server via suitably configured GUI(s) operating, in conjunction with any applicable display(s) 8160, keypad(s) 8140, etc.; and at exchange 1613b, such account entry may be performed from suitably-configured GUI(s) 1524 in conjunction with networked resource(s) 912, 914, etc. via for example a Web interface to the cloud server. Thereby, action(s) provided to public reading device(s) 810b at exchange 1609, pursuant to reading the tag at exchange 1605, may be modified. Accordingly, exchanges 1613 provide for a pseudo-link between the cloud server account and the tag.

As referenced above, and as indicated by exemplary embodiments discussed herein, security of data such as that exchanged in signaling transactions shown in FIG. 16 may be an aspect of the embodiments. Security may be particularly important in embodiments wherein, for example, a public tag indicates a uniform resource locator ("URL") that points a reading device to a site, or to download an app, that may be malicious. Further, security is particularly indicated in embodiments wherein financial information, or user identifying information, may be exposed to, for example, wrongful monitoring / appropriation by parties other than those intended by the communicants. Further, various types of applications, such as those in which Java Script may be downloaded, may be particularly likely to expose user information stored on a device. Exposure of such information may be particularly likely to be nefarious or malicious in such embodiments when the certain user information requested may not be relevant to the action (or app) being downloaded. Moreover, security concerns may suggest the exclusion of certain types of actions, such as excluding a direct "surf' to a Web site as an action to address a security concern.

In each such case, initial security layer(s) may be added for a reading device by asking a user of the device whether the user is certain that he or she wishes to proceed with downloading an action (or downloading code, data, or an app responsive to the indicated action), such as in a manner akin to current downloads from the Blackberry AppWorld to Blackberry devices. Of course, those skilled in the relevant arts will appreciate that security, as discussed herein, may encompass one or a plurality of different types and/or layers of security.

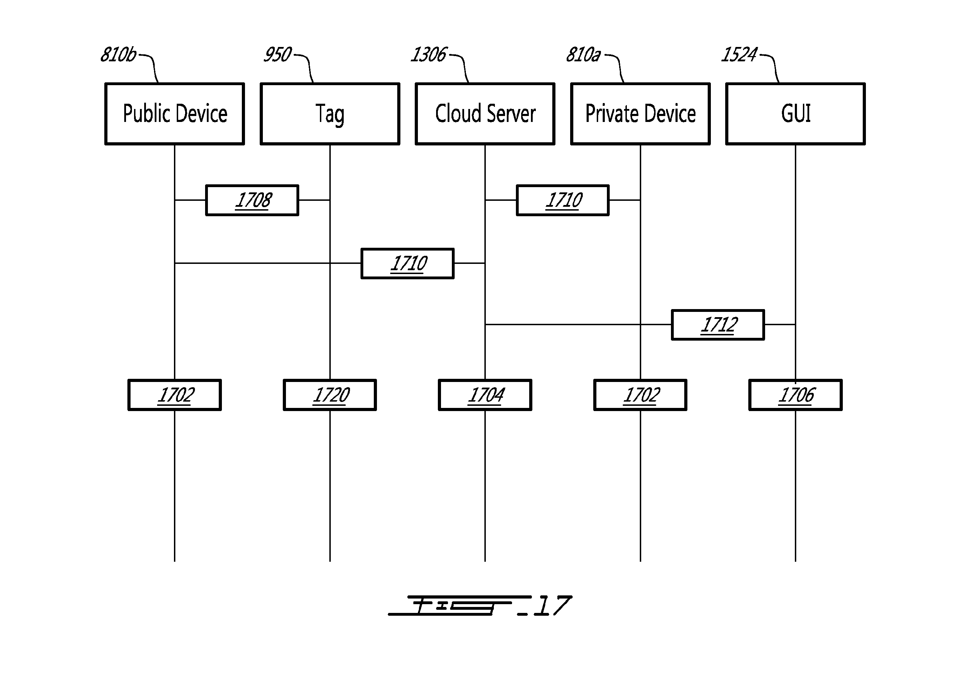

As illustrated in **FIG. 17**, security may be provided for communications within, on, or between any or all of devices 810a, 810b (1702), cloud server 1306 (1704), GUI 1524 (1706), between the device 810 and the tag 850 (1708), between the device 810 and the cloud server 1306 (1710), and/or between a Web GUI 1524 and the cloud server 1306 (1712), by way of non-limiting example, and the location at which security is implemented may indicate the type of security employed. That is, security may be implemented as all or part(s) of one or more actions, as actions are discussed herein, and thus may be implemented by, from, and/or in conjunction with, for example native and/or a non-native app(s) 8130A-N, 1406, or may be otherwise implemented as will be understood to those skilled in the pertinent arts. Further, as would be understood by those skilled in the art, different types of, or locations for execution of, security may have different complexities. For example, security may be based on the types of data exchanged in a communication transaction. Those skilled in the relevant arts will appreciate that, although particular examples of security are discussed below, any known type of security or security protocol may be employed in relation to any aspect within a device or over a communication link. For example, security protocols through which a tag owner may access tag information through a Web or private device GUI is well understood in the pertinent arts.

For example, public tags 850 may, as discussed above, be made available for various dedicated types or purposes for usage. As such, the type of tag 850 may indicate the type or level of security employed with respect to communications involving the tag, wherein the type or level of security may be included with the data stored on the tag, may be indicated by the cloud server, or may be assessed by/known to the device based on the tag type. Moreover, tags 850 may be provided from a single source (e.g. manufacturer, programmer, owner, authorized administrator, etc), or a uniform set of trusted sources, whereby, for example, a single source administrator may be enabled to deactivate and/or reprogram any tags used in a malicious or nefarious manner, i.e., all tags may automatically self-register upon activations of actions correspondent to the tag, and any tags known by any device to direct a nefarious action may be blocked from communicating the address or other information from the tag to a reading device. Such a list of "blocked" addresses or actions may constitute a "black list." Accordingly, it may be preferred that only a single device or groups of devices are enabled to initially program a tag with particular server addresses, i.e., a "white list," for example. Additionally, it may be that mobile device operators or manufacturers may maintain the white list and/or the black list of cloud servers and/or actions, or alternatively operators or manufacturers may allow for interaction of devices only with trusted actions, or with trusted cloud servers. This, of course, may be the case in exemplary embodiments specifically because the tag discussed herein provides an address of a cloud server or action(s) at a cloud server, and because it is not until the actions discussed herein are executed that the data exchanges and/or device operations of the action happen. Thus, unlike the known art, security, and/or a black list or a white list, may be managed in the herein disclosed devices, systems, and methods at any point up until an action execution is completed.

In a more particular example of the foregoing embodiments, security may be, at least in part, handled from the cloud server 912, 914, 1306. For example, recognition in the cloud may occur as to "signed" tags, i.e., tags that are identified with specifically-identified known creating (private) device(s). Additionally, tags may be locked through the use of encryption, passwords/PINs, and or other data-authorization techniques, and such locked tags may be prepackaged with embedded identifications thereon. Further, tags may be "fused," such as wherein nefarious or malicious actions stemming from the cloud server addressed by the tag would "blow" the fuse, i.e., prevent all other read/write operations associated with the tag other than any operations initiated by specifically-authorized device(s) 810, for example. Such a fuse may be literal, i.e., wherein the tag is made inoperable (such as wherein the tag is active and may be interacted with remotely), or a pseudo-fuse, i.e., wherein the referenced cloud server address is disabled from sending actions to public reading devices.

Additionally, secondary security measures 1720 may be associated with the tag, such as including a QR code with a tag 850, the QR code carrying additional identifying and/or security information related to the tag (and/or its cloud server address). In such embodiments including secondary security measures, a match may be required in the cloud as between a tag identifier and an additional identifier, such as the QR code, prior to allowing the device to engage in an action directed by the cloud server identified by the tag. Accordingly, security is heightened through the use of a secondary security measure. Of note, because each tag has unique identifier, tag identifiers may not be reused, and as such, a nefarious/malicious/cloned tag may be easy to detect, such as by the central gatekeeper discussed herein, or the like. Thus, because a barcode or QR code embodiment allows for repeated copying, the inability to copy an NFC tag (in embodiments wherein such tags are manufactured having only single-use, unique identifiers) provides security not available in simple bar code or QR code embodiments that do not include a primary security measure associated with an NFC or RF ID tag.

Yet further, a security algorithm, such as an elliptical curve (EC) security mechanism, may be employed at any point shown in FIG. 17. More particularly, and as discussed further in co-owned United States Patent Publication No. 2008/0150702A1 which is incorporated by reference as if set forth herein in its entirety, security may be included with an NFC tag that comprises "signing" the tag using an EC cryptographic scheme. Such a scheme may be an elliptic curve Pintsov-Vanstone signature (ECPVS) scheme, or an Elliptic Curve Qu-Vanstone Implicit Certificate Scheme (ECQV), or an elliptic curve digital signature algorithm (ECDSA), for example. By way of non-limiting example, a first set of data may be obtained to be written to the tag, the first set of data having information therein intended to be hidden from unauthorized RFID readers. The first set of data may be incorporated into an EC signature scheme. A signature may then be written to the tag using a private key having a corresponding verification key, wherein the first set of data may be recovered by an authorized RFID reader having access to the verification key.

Similarly, a device may be able to certify, such as from an identifier associated with the tag, that the programming device is a genuine and/or certified private device. Likewise, the tag may be identified (such as by a public reading device) as a tag from a genuine manufacturer, and/or a reading device may be certified as coming from a particular manufacturer or operator. Accordingly, it may be selectable from the cloud server as to what type of tags may interact with the particular cloud server, what kind of devices are enabled to interact with particular tags, and what type of tag creators are enabled to program particular tags, for example.

Additionally, the cloud server 1306, and/or actions associated with the cloud server 1306, may be tied to a particular user identifier, such as a Blackberry ID, to limit, or allow for simple exposure of nefarious actors. For example, an app, a cloud server, and/or actions provided therefrom, may be tied to a particular Blackberry ID, whereby the generators of such actions thus lose anonymity. The likelihood of fraudulent or nefarious actions is significantly decreased when an interaction is not anonymous.

For example, and as discussed with particularity in co-owned U.S. Patent No. 6,792,530, which is incorporated by reference as if set forth herein the entirety, an identity-based encryption key may be used. In such embodiments, private devices 810, tags 850, cloud servers 1306, and/or associated actions (for purposes of this example, the "entity"), may be uniquely identified by a trusted party, such as the central gatekeeper discussed herein. Thereafter, a public key may be generated by combining information from the trusted party with the unique identifier of the entity. A private key may be generated by the entity using its identifier. Consequently, knowledge of the public key and the identity of the entity allows for decryption of communications encrypted using the entity's private key. Similar exemplary embodiments of security associated with a tag or action may include illustrations set forth in co-owned U.S. Patent No. 7,249,251, also incorporated by reference as if set forth herein in its entirety.

By way of more particular example, if a high-risk data set, such as a Java application, is provided as part of an action or as part of a request for an action, exposed APIs may be limited to only publicly available Java APIs for native device functionality, such as to insure protection of the underlying device data and operating system, i.e., to insure that actions cannot call undocumented or unsupported APIs or access data that is not to be explicitly exposed through the APIs. Such "public APIs" may be open or signed. Signed APIs may expose access to device user data or other information on the device that is considered sensitive. In order to use such sensitive, signed APIs, the private user programming the action may request and receive a set of code signing keys from, for example, a central gatekeeper 1802 as discussed further hereinbelow (Figure 18). Thereafter, code signing of the application or action may allow for specific identification of the creator, or more particularly the creating private device, for the application or action.

Further, native or non-native apps may be employed to identify actions, servers, or apps that engage in odd or otherwise suspicious behavior that may be malicious or nefarious. For example, a native or non-native app that assesses that an action from the cloud server is directed to the device's camera, but that assesses that the action is also attempting to access contacts or email on the device, may indicate that the action is nefarious.

Yet further, and as illustrated in **FIG. 18**, one or more central gatekeeper system(s) 1802 may be provided to oversee cloud servers 1306a, 1306b, 1306c that provide actions to devices from an aspect of cloud 990. Such a central gatekeeper may correspond, for example, to a tag manufacturer, and/or a device manufacturer, and/or to device operators, by way of non-limiting example. Thereby, tag owners may log in to their respective, authorized cloud server that is known to/authorized by the central gatekeeper to offer actions. Such log-in may be made, for example, in order to program or reprogram actions, and may thus be tracked by the central gatekeeper based on the logging in.

Actions initiated upon log-in of a tag owner/administrator may be correlated by central gatekeeper(s) 1802 with known actions performed by devices 810a, 810b that access a cloud server 1306, such as in order to assess patterns of malicious actions stemming from particular servers, and thus stemming from the parties that log-in to such servers. Further, code signing may be employed in order to assess that the party that programmed an action for a particular server is the same party that reprograms those actions for the particular cloud server. Additionally, a security thread may be communicated to a public reading 810 device from the cloud server and/or by the central gatekeeper, and, in the event the security thread is broken, it may be recovered from, and the device may not honor directed actions corresponding to a broken security thread.

Moreover, central gatekeeper(s) 1802 may monitor capabilities signing, in which an app or action provider must register device data to which an app or action provider will need access the central gatekeeper, which capabilities information may include indications as to why such access is needed. Device data for which access is not requested upon capability signing may thereafter not be available to that app or action provider. Further, in such an embodiment, user(s) of requesting device(s) may be warned, based on the capabilities signing, that the action which the public user is about to execute on his or her device will allow, for example, a third-party to see his or her contacts or pictures, by way of non-limiting example. Of course, in such embodiments, security may be provided by allowing the public user to decline to execute such an action.

Additionally, security may be, in whole or in part, location-based. For example, in exemplary embodiments discussed herein in which a public user reads a tag in a particular retail outlet, such as in a retail department store, and wherein the store is known to employ particular tags and a particular cloud server to which its customers are pointed in order to receive actions, a public reading device that is pointed to go to a third-party cloud server, or that is directed to perform an action not related to the retail department store or its owning entity, may have been subject to or may be attempting a malicious or nefarious action. Relatedly, a public reading device that attempts to access a cloud server from a location determined to be different from locations associated with the retail store or the locations of the tag(s) programmed to refer reading devices to that cloud server, may have been subject to or may be attempting a malicious or nefarious action.

Further, in such exemplary embodiments, the owner/operator of the retail department store may acceptably regionalize its offered actions, for security and/or for other purposes, such as wherein particular stores or regions are serviced by particular cloud server(s) associated with the retailer, or such as wherein users in particular stores or regions may avail themselves of particular actions associated with the retailer. Those skilled in the relevant arts will appreciate further that such regional embodiments may allow for regionalized modifications to actions by a tag owner, by way of non-limiting example. Moreover, in such cases, regional cloud servers or regionalized actions may likewise be subjected to at least partially geographically-based security. Further, such regionalization may allow for the use of different security protocols in different geographic regions.

Additionally, such geographically-based embodiments may further allow for variations in the security of the data or of the services provided, i.e., purchased by or available to, particular public reading devices. For example, it may be desired by Starbucks coffee outlets that a particular music playlist be made available via an action, such as pursuant to a tap interaction with an in-store tag, to public reading devices within Starbucks stores. However, Starbucks may wish to maintain the security of this action by ensuring that the action is geographically limited to those making prospective purchases at a Starbucks store. As such, upon leaving the Starbucks store, the action providing the music playlist may preferably no longer be available to the particular public reading device. Accordingly, at least part of the action of the device receiving and/or playing the playlist may be a geographic security certificate that expires upon departure from the particular geographic location.

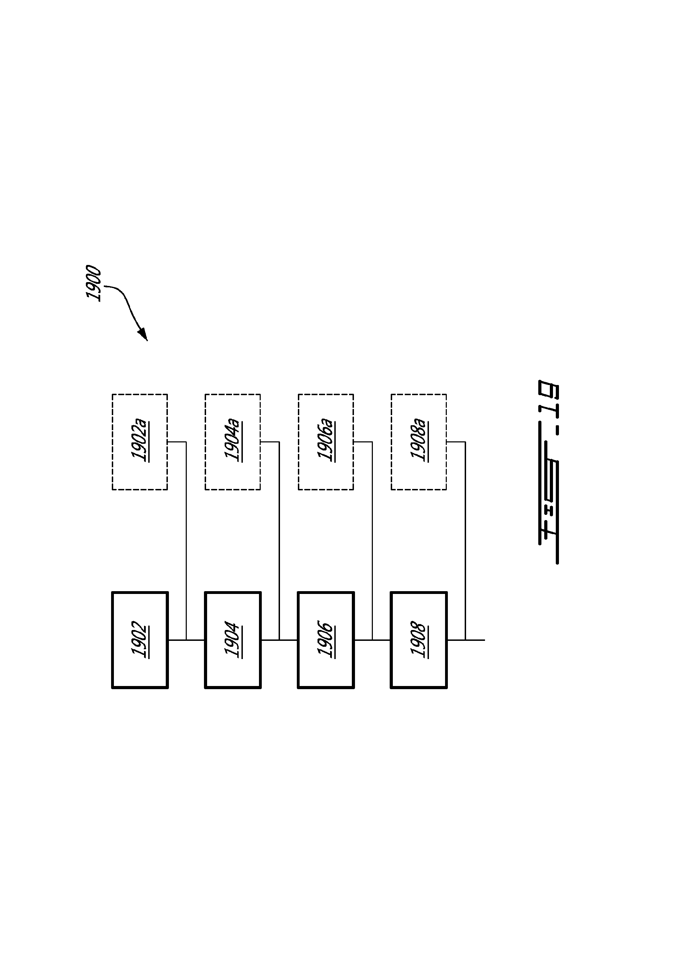

With reference to **FIG. 19****,** there are shown aspects of a method 1900 suitable for implementation by, for example, one or more private devices 810 in accordance with the disclosure. In the embodiment shown, method 1900 includes communications between a tag 850 and a programming (private) device 810, a GUI 1525 operating on the private device and/or a cloud server 1306 (which also may provide a pseudo-link between the tag 850 and its owner/administrator, as discussed in FIG. 15B). Further, security implementation may be an aspect of the illustrated method 1900.

At step or process 1902, a private device 810, 120 signals to a tag 850, thereby writing to the tag, for storage thereon, at least an address associated with a cloud server 1306, and/or address(es) or other identifying information associated with particular action(s) provided at or through cloud server(s)

At 1904, the private device 810 may read the programmed tag 850 to request, obtain, or otherwise access an action, acting either as a private reading device to obtain a private action, or simulating a public reading device to simulate what the recipient of a public action will receive, respectively.

At 1906, the action requested at step 1904 is received from the cloud server 1306. At 1908, the user interacts, via a GUI 1524 on the user's device 810, with the cloud server 1306 to program or reprogram actions to be associated with the cloud server for which the address was written to the tag at step 1902.

At optional step 1902a, security may be implemented to identify/verify the device, and/or the tag. Such security implementation may be performed by the device alone, or in association with the cloud server. At optional step 1904a, a security verification/identification to the cloud may be performed by the device. At optional step 1906a, a security identification/verification may be implemented on information received from the cloud server. At optional step 1908a, security may be implemented, such as by a user log-in from the private device, to verify authorization to program or reprogram a tag.

With reference to **FIG. 19****,** there are shown aspects of a method 2000 suitable for implementation by, for example, one or more public devices 810 in accordance with the disclosure. As shown, method 2000 may include communications between a tag 850 and a public reading device 810, and a public reading device and a cloud server. Further, security implementation may be an aspect of the illustrated method 2000.

At 2002, a public reading device 810 reads a tag 850, after establishing an NFC communication session based for example on proximity or via a tap between the devices 810, 850.

At step 2004, the public device 810 receives from the tag 850 and interprets data representing at least the address of the cloud server and/or of an action on the cloud server. At step 2006, the public reading device 810, having received and interpreted the cloud server address, initiates or otherwise establishes a communicative connection with the cloud server 912, 1306 at that address (and/or to the action on the cloud server). At step 2008, the device receives an indicated action from the cloud server, and at step 2010, the public device 810 interprets and executes the received, or indicated, action.

At optional step 2002a, security may be implemented in the form of verification of the tag. At optional step 2004a, security may be implemented, such as by comparison of an address to a black list or white list. At optional step 2006a, the initiation of communication with the cloud server may include security information to allow for a security implementation by the cloud server. At optional step 2008a, security may be implemented, such as by verification of the received action, the cloud server identity, or the like. At optional step 2010a, security may be implemented, for example, by verification of the action, and that the action is in conformance with acceptably requested capabilities of the device to enable the requested action.

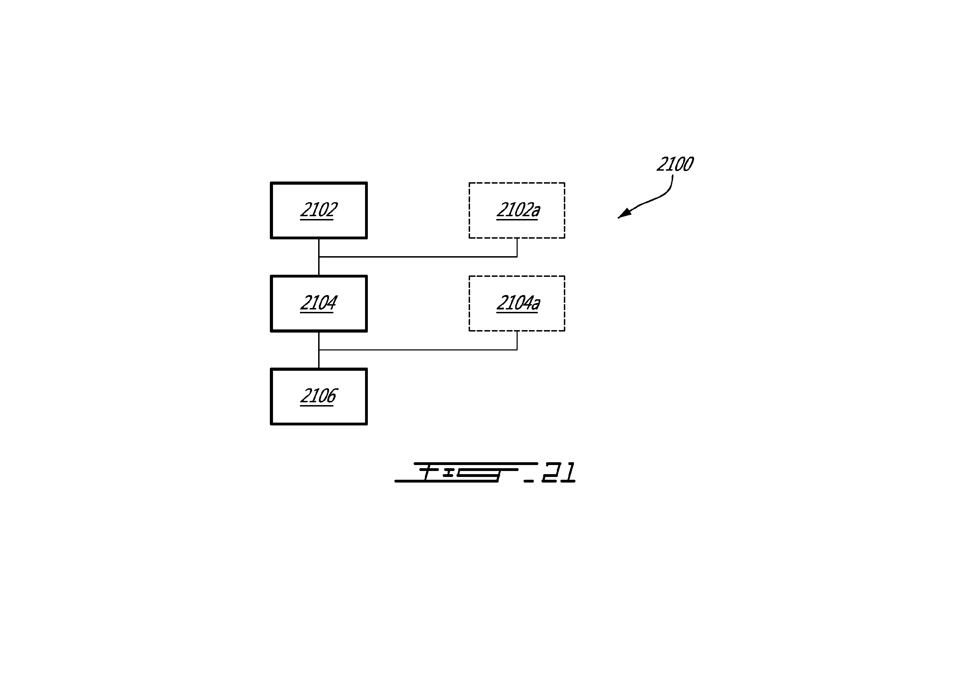

With reference to **FIG. 21**, there are shown aspects of a method 2100 performed by a cloud server 1306 in accordance with the disclosure. In embodiments such as that shown, method 2100 may include communications between one or more of each of private or semi-private reading devices 810, cloud servers 1306, and GUIs 1524. Further, security implementation may be an aspect the illustrated method 2100.

As illustrated, at 2102, a server 912, 1306 may receive data and/or instructions useful for programming and/or reprogramming actions stored at or otherwise associated with one or more addresses accessible by or via the server 912, 1306, from one or more private devices 810 and/or GUIs 1524.

At 2104, the server 1306 may receive and interpret data representing a request for information (i.e., actions) stored at otherwise associated with one or more addresses accessible by or via the server 912, 1306, via an uplink from one or more private, semi-private, or public reading devices 810.

In response to the interpreted request for information, at 2106, the server 912, 1306 may transmit, via a downlink, requested information to the requesting device(s) 810. As will be understood by those skilled in the relevant arts in light of the discussion herein, communication of the information to the cloud server at step 2102 may comprise a pseudo-link between the server and a tag 850 on which the server or other address information is stored, at least in that a device reading 810 the tag 850 will receive from the server 912, 1306 the action that is sent to the server at step 2102 as corresponding to the tag 850.

At optional step 2102a, security may be implemented, such as by verification that the programming private device is authorized to program or reprogram an action at the cloud server. At optional step 2104a, security may be implemented, such as through verification/identification.

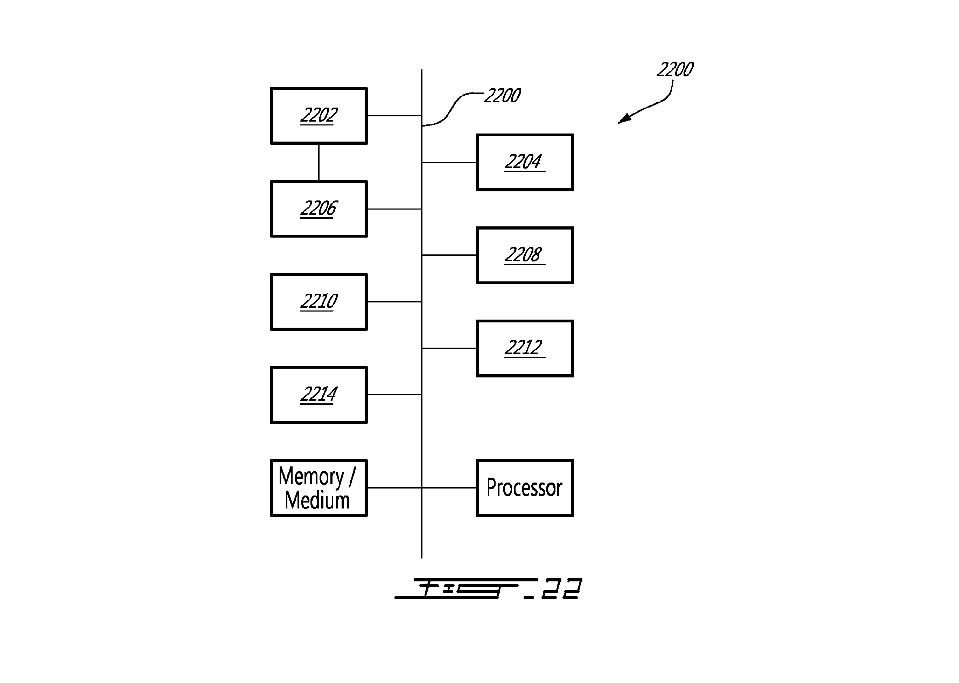

With reference to **FIG. 22**, there is illustrated an embodiment of an apparatus 2200 that may be configured as an NFC-capable device 810, 914, etc., that can access a network 430, 900, 8141, etc. As illustrated, the apparatus 2200 may include (sub)systems and/or other components, including, for example, modules 8130AN, 2202-2214, that can comprise memories, firmware, processors, etc., useful for implementing functions, applications, routines, etc., suitable for use in implementing various aspects of the disclosure, e.g., by software running on a processor, or the like (e.g., firmware).

For example, an apparatus 2200 may include any one or more electrical component(s), software/firmware module(s) 2202, 8102, 8130B, 8130C, 8132 (e.g., NFC antenna 8132b and NFC controller 8132a), etc., capable of communicating from and/or to NFC tag(s) 850 and/or other NFC-capable devices, to thereby program to the tag(s) 850 and/or device(s) for storage or other availability of data such as, for example, at least the address of a cloud server 1306, and/or address information associated with particular actions available at or otherwise accessible via the cloud server.

The same and/or other electrical component(s) or module(s) 2204 (which may for example also be or include NFC antenna and NFC controller 8132b and 8132a, and/or other devices / modules 2202, 8102, 8130B, 8130C, 8132, etc.) may read and interpret a programmed tag 850 to obtain an address of a cloud server on which is stored an action executable by electrical component(s) and/or module(s) 2206 (e.g. microprocessor 8180 and action app 8132d). Electrical component(s) and/or module(s) 2208 (e.g., transmitter 8152 and general antenna 8156) may transmit a request from module 2204 to obtain information, such as an action, stored at the address of the cloud server. Electrical component 2206 may then receive the requested action for execution on the device from electrical component or module 2210 (e.g., receiver 8150 and general antenna 8154). Electrical component or module 2212 (e.g., display 8160 and keypad 8140) may allow for user interaction with the cloud server, and/or with ones of the electrical components discussed above, including pursuant to delivered actions. Electrical component or module 2214 (e.g., security module 8130D) may implement security with respect to the various data and communicative links received, transmitted, or executed by the device.

With reference to **FIG. 23**, there is illustrated an exemplary apparatus 2300, 912, etc., that may be operable or configured as a cloud server 1306 in a network 430, 900, 8141, etc.. As illustrated, the apparatus 2300 may include (sub)systems and/or other components including, for example, modules 8130A-N, 2202-2214, that can comprise memories, firmware, processors, etc., useful for implementing functions, applications, routines, etc., suitable for use in implementing various aspects of the disclosure, e.g., by software running on a processor, or the like (e.g., firmware).

For example, the server 2200, 1306 may include electrical component or module 2302 (e.g., receiver 8150 of a network interface communicatively coupled through one or more networks to antenna 8141) for receiving signals/data useful for programming and/or reprogramming actions to be stored at addresses associated with electrical module(s) or component(s) 2305 (e.g., a memory 8116, disk drive, or other data storage device). Component(s) 2302 may receive the programming or reprogramming via a wireless or wired network link, such as a link to the Internet, for example. Electrical component(s) or module(s) 2304 (which may also be receiver 8150 of a network interface communicatively coupled through one or more networks to antenna 8141), may receive request(s) for information (such as actions) stored at the one or more addresses of the component 2305. Electrical component(s) or module 2306(s) (e.g., transmitter 8152 of a network interface communicatively coupled through one or more networks to antenna 8141) may transmit, via a downlink, requested information to the requesting device. Electrical component or module 2308 (such as management module 8135) may manage the pseudo-link between the server and the tag on which the server address is stored, at least in that it manages transmitting an action stored at an address at the server to a device reading the tag. Component 2308 may be or include a security electrical component or module 2310 that may be, or that may operate in cooperation with, security module 8130D of a tag reading device, for example.

In related aspects, apparatuses 2200 and 2300 may include processor components, which may be in operative communication with the components 2202-2214 and 2302-2310, respectively, via buses 2220 and 2320, respectively, or via similar communication coupling. The respective processors may affect some or all of the processing of, and/or the initiation and/or scheduling of, the processes and/or functions performed by electrical components 2202-2214 and 2302-2310, respectively.

In other related aspects, one or both of exemplary apparatuses 2200, 2300 as described herein may include additional radio transmitter/receiver components. The apparatuses 2200, 2300 may also include network interfaces and/or network controllers (not shown) such as component(s) / module(s) 8130B, 8101, etc., for connecting to and communicating via one or more network entities 430, 900, etc. One or both of such apparatus 2200, 2300 may optionally include additional components for storing information, such as, for example, a memory device/component 8116 and/or 8118, or other computer readable medium such as a magnetic or optical drive. Such computer readable media may be operatively coupled to the processor(s), memory component(s), or other components of the apparatuses 2200, 2300, such as via data busses 2220, 2320, or the like. Such data storage components may be adapted to store computer readable instructions and data for affecting the processes and behavior of the components described in each of the apparatuses, and subcomponents thereof, and/or the processors, and/or the methods disclosed herein. Memory components described herein may retain machine-interpretable instructions for causing processors 8180, 8132a, 8150, etc. to execute functions associated with various components of the apparatuses. While shown as being distinct from the memory and processing components, it is to be understood that one or more of the other components may be realized within or in cooperation with the memory and processing components illustrated; and that components may be provided in any suitable form(s) (e.g., hardware, software, and/or firmware) and type(s) (processors, buses, memories, etc.), and combination(s) thereof. For example, the various components, devices, and (sub)systems shown and described throughout the disclosure may comprise their own respective processors, electronic devices, hardware devices, electronic subcomponents, logical circuits, memories, software codes, firmware codes, etc., or any combination(s) thereof.

Information, data, and/or other signals discussed and/or otherwise contemplated herein may be represented and processed using any of a variety of techniques. For example, content data, instructions, commands, information, signals, symbols, and other actions that may be referenced herein may be implemented using, or may at least in part be represented by, voltages, currents, electromagnetic waves, magnetic fields or particles, optical fields or particles, etc., and/or any combination(s) thereof.

Further, the various illustrative logical blocks, modules, circuits, methods and algorithm steps described in connection with the devices, systems, and methods disclosed herein may be implemented using specialized and/or general purpose electronic hardware, software and/or firmware. Because the devices, systems, and methods described herein may be implemented in a variety of manners and constructions, the various illustrative components, blocks, modules, circuits, and steps have been described above generally in terms of their functionality. Whether such functionality is implemented in hardware alone or in combination with software or the like (e.g., firmware) depends upon the particular application, skill of the artisan, and design constraints imposed on the overall system.

The various illustrative logical blocks, modules, and circuits described herein may be implemented or performed using one or more processors, digital signal processors (DSPs), application specific integrated circuits (ASICs), field programmable gate arrays (FPGAs) and/or other programmable logic devices, discrete gates or transistor logic, discrete hardware components, or any combination thereof capable of implementing the methods and algorithms and performing the functions described herein. A general-purpose processor may be, or include, any one or more suitable microprocessors, controllers, microcontrollers, state machines, etc.., and/or combinations thereof. A processor may be implemented, for example, as a combination of computing devices, e.g., a combination of a DSP and a microprocessor, a plurality of microprocessors, one or more microprocessors in conjunction with a DSP core, or any other such configuration.

Software modules discussed herein may reside in RAM memory(ies), flash memory(ies), ROM memory(ies), EPROM memory(ies), EEPROM memory(ies), register(s), hard disk(s), removable disk(s), CD-ROM(s), SD cards, etc., and or any other form of volatile or non-volatile solid state, magnetic, optical, or other processor or computer readable data storage medium known in the art, and/or combinations thereof. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

If the designs herein are at least partially implemented in software, the functions may be stored or transmitted as one or more instructions or code in a non-transitory manner on or using at least one computer-readable medium. Computer-readable media may include both computer storage media and communication media including any medium that facilitates transfer of a computer program, action, or other computer readable data from one place to another. A storage medium may be or include any medium that can be accessed and processed by a general purpose or special purpose computer. Also, any connective hardware may be considered to be within the scope of a computer-readable medium. For example, if information is transmitted from a website, server, or other remote source using a coaxial cable, fiber optic cable, twisted pair, digital subscriber line (DSL), or wireless technologies such as infrared, radio, microwave, or the like, then the coaxial cable, fiber optic cable, twisted pair, DSL, or wireless technologies such as infrared, radio, microwave, or the like may be included in the definition of medium.

Additionally provided below are a series of particular exemplary applications and/or embodiments illustrative of the applicability of aspects of the herein disclosed devices, systems, and methods in a variety of contexts. As will be appreciated in light of the instant disclosure, the disclosure is not limited to the preceding or the following examples, but rather is inclusive of all embodiments for which the illustrative aspects described herein may be realized.

In a first example, travel tags 850 may be made available to comprise addresses of one or more cloud servers 1306, 912 and/or actions related to necessary device functionality when an employee is traveling. For example, an administrative assistant at an office may have access, such as via a desktop GUI 1524 communicative with the cloud server, to actions for downloading or otherwise directing to particular devices 810, 120, upon interaction of those devices with the cloud server. When a manager of the assistant is traveling, for example, the assistant may thus program actions to the cloud server, for example, comprising conference call times and dialing information that will occur while the manager is traveling. Furthermore, such conference call information may be modified by the assistant at any time by interfacing with the cloud server and modifying the action previously associated with the cloud server address that is referenced by a particular tag.

Accordingly, the manager may take the tag with him on travel, and may tap the tag at any time to obtain the particular actions programmed by the assistant. Additionally, a tap of the tag may point to other actions from the addressed cloud server, such as wherein calendar updates populated to the cloud server by the assistant are downloaded to the device as the device action upon tapping the tag. Further, the device may be directed to obtain actions which, when executed by the device, perform hardware or firmware related functions, such as dialing a dial-in number at the start time of a calendared conference call. Needless to say, the device 810 may download the conference call information from the cloud server when downloading the calendared events or at any time thereafter, and correspondingly the device may be programmed by the initial action to take a subsequent action without further instruction, such as the aforementioned dialing of a phone number at the downloaded calendared time. Or, such as to ensure calendared events and/or dial-in numbers are up to date, the device may be programmed by the initial downloaded action to receive pushed changes to the calendared events, play an alert to indicate a change has been received, and/or remind the traveling manager to tap the tag anew at a certain time, such as when the calendared conference call is to occur in order to participate in the call. Upon the secondary tap, the downloaded action may include an update to the call agenda, and/or a one touch or no touch dialing of the relevant conference call number, such as inclusive of conference call dialing codes, per the directed action from the cloud server.

A further use of such travel tags may, for example, include enabling touch-re-profiling of a device 810, 120, etc., such that at a single gesture a user may transfer his/her device 810, 120 into a control profile state preferred by the user for use while traveling - for example, date/time settings (including for example time zone), alert settings, wireless connection preferences, out-of-office-reminders, call-forwarding settings, etc., may be pre-configured and used to place the device 810, 120 into a desired 'travel' or other state quickly and reliably, on demand. As will be apparent to those skilled in the relevant arts, once they have been made familiar with this disclosure, any number of control profiles may be pre-configured, and corresponding data / instruction sets stored on, or (in for example the case of QR codes) for example, suitably labeled tags 850, for home, office, travel, boat, romantic evening, etc., and the tags may be placed in suitable, convenient locations for use as needed.

For example, the aforementioned traveling manager may tap the tag in any vehicle to enable an action setting up Bluetooth, with the manager's preferences, in a rental vehicle, and/or to receive an action directing the correspondent playing of music by the device through the Bluetooth connection, for example. Cars and the like may also be set up in other manners simply by tapping the device to the tag, thereby inducing the reception by the device from the corresponding cloud server of actions directing the device to cooperate with the car to set it up in a certain manner.

As discussed herein, public tags 850 may be programmed by private devices 810, 120, and reprogrammed at will by persons authorized to interact with the tags and/or associated cloud server(s) 1306. Public tags 850 may further be dedicated for particular uses, and may correspondingly have associated therewith particular allowable actions based on a tag identifier. For example, in a real estate embodiment, a real estate agent may use tags to allow public reading devices to access information regarding a particular listing by tapping a tag located at the listed location, for example. Further, the real estate agent may obtain the tags based on the information to be conveyed to the reading device based on a particular scenario. For example, if the real estate agent wishes only to have textual information describing the house automatically displayed on a reading device in accordance with a received action, the real estate agent may use less expensive tags identified as having a certain data limit for conveyance in a given action. But, to the extent the real estate agent wishes to use a public tag at the house to convey to the user, as the action obtained from a cloud server and executed by the device in response to tapping the tag with the device, substantially all information regarding the house, such as pictures of the inside and the outside of the house, and/or to include in the action a tracking, identification, and conveyance back to the real estate agent's account at the cloud server identifying characteristics of the public reading device that reads the tags, the real estate agent may purchase significantly more expensive tags identified as having a much greater data limit for conveyance. The variation in the tag pricing and data limit may not be because the less expensive tags would be incapable of pointing users to a particular server, but rather because the creator of the tag may be asked to pay for the tag at a level commensurate with the actions the creator of the tag wishes the tag to impart to reading devices from the cloud server. As such, and as is the case herein throughout, a tag may have any value (e.g., price) accorded thereto, but in preferred embodiments the value placed by a vendor for the tag may be corresponded to the value added by the actions that may be imparted by the tag. That is, if a user wishes more lucrative or prospectively lucrative actions to be imparted from the cloud server, the user may be asked to purchase more expensive tags to impart those actions.

Further, as previously mentioned, tag(s) 850 may comprise multiple actions accessible to multiple levels, or other sets, or groups, of tag readers 810, 120, based for example on administrative rights/privileges, private/semi-private/public privileges or distinctions, etc. Further to the real estate example discussed above, for example, tag(s) 850 may be programmed to enable one or more realtors to gain administrative access to establish, remove, and/or modify some or all information on the tag; first-time or casual visitors may be enabled to gain basic information; repeat visitors and/or serious viewers may be authorized to gain more detailed and/or sensitive information, and competitor and/or cooperating realtors may be enabled to gain access to still further sets of data.

By way of yet another example, a restaurant application may allow for the use of public tags 850 to direct user devices to perform actions once patrons are seated in, or prior to being seated in, the restaurant. For example, a public tag 850 placed at each table in a restaurant may allow for each public device in proximity to (and/or that taps) the tag, or that chooses to interact with the tag, to display the restaurant's menu, wherein the menu may be varied periodically in the cloud server by the restaurant. Of course, in this and similar embodiments, the public user device may additionally avail itself of further, possibly related, actions. For example, the device 810 may be directed to execute an action to invoke a local and/or server-based application to display the menu, with correspondent hyper-text for the available items on the menu. Accordingly, the public user may select a menu item from the device, and because the particular device has been identified in a cloud server or other server associated with the restaurant and/or tag 850, the public user's order may be sent, such as via the cloud server to a tag owner/administrator GUI, (e.g., wait staff, kitchen, and/or restaurant management, along with an identification of the user's table, so that the order can be prepared and delivered to the user). Further, in such embodiments, a diner's public reading 810 device may receive additional actions to allow for the user to make payment for the goods or services ordered. By way of non-limiting example, upon the ordering of the food via interaction with the hyperlink in the current example, the public reading device may be directed to undertake the action of opening, for example, a Google Wallet® or other native and/or non-native app 1404, 1406, 8130A-N, stored on or otherwise accessible by the device, and based on the Google Wallet information, payment may be delivered as an action from the user's device to the restaurant for the user's food order. Social interactions with wait staff, other patrons, live music DJs, remotely-located friends, restaurant reviewers, etc., through social networking sites may also be enabled.

In an additional exemplary application set forth with respect to retail outlets, public tags 850 in conjunction with native or non-native apps 1404, 1406, 8130A-N may be used to consumer traffic to particular stores. For example, a particular retailer, such as LargeRetailer, may offer variable discounts on goods by directing a coupon action to public reading devices that read tags while in store. The discounts authorized by the coupon may range, for example, from five to fifty percent, and may, in reality, be manually and/or automatically selectable, or otherwise modifiable, in one or more cloud servers 1306 by LargeRetailer in real time based on the hour of day, the foot traffic currently experienced by the store, purchases typically or currently being made within the store at certain times, or on certain days, or like information, for example. Further, such coupon action(s) may be directed to native apps and/or non-native apps 1404, 1406, 8130A-N, and announcements, if any, alerting user(s) to the availability of the coupon action(s) may be related particularly to a non-native app, such as a downloaded proprietary LargeRetailer app, that may be downloaded by the user to the public reading device. Further, to the extent the use enters LargeRetailer with a device that does not have the LargeRetailer app, an initial tap of a tag 850 within LargeRetailer premises may assess at the cloud server '306 that the LargeRetailer app is not on the device 810, and the user of the device 810 may be offered, by means of suitably configured apps and GUIs, action(s) configured to enable downloading of the LargeRetailer app before any coupon action is undertaken.

Among other advantages, coupon-based interaction(s) such as those described herein enable, particularly wherein coupons are downloaded, such as by a non-native application 1406 to a device 810 by tapping of a tag, consummation of a transaction via an NFC device-to-device transaction wherein coupon-indicated discount(s) are to be realized. Moreover, a payment transaction, such as interaction with a preferred virtual wallet application made available on or from the device, may be indicated from the cloud server 1306 as a preferred in-store payment mechanism based on the tag accessed, and based on the identification of the user device as a device properly in receipt of such discount based on the presence of the coupon. Such methods offer at least the advantages that no printed coupons are necessary, which eliminates problems associated with distribution, transportation, and other handling of printed coupons.

In an additional example, a private user may have at least one tag 850 in her home, and may associate with such tag(s) cloud-based actions adapted to cause her device 810 to take any desired actions in managing household lighting, environmental control, or other systems, and/or setting control profiles or actions executable via local modules 8130A-N, etc., such as causing her private reading device 810, 120 to play any desired music playlist(s) upon tapping the tag. Such private user may further execute any further actions whereby, for example, the private reading device 810 engages in a Bluetooth synch to a home speaker system, whereby the music in the device's playlist is played throughout the house, or in desired portions thereof. However, a different public user entering the user's house may likewise tap the tag 850 to execute an action causing the device to play a different, public playlist of music while in her house on the visitor's device; however, for public or other unrecognized/unauthorized users, no Bluetooth synch may be provided to the woman's whole house speaker system.

As a further example, as discussed above, a tag tap may provide an action of setting up a conference, such as a video conference, by way of non-limiting example. For example, an administrator may place tags 850 on the desk of three employees, such as for use on a particular day for a video conference, and a video conference announcement may occur in the calendar of each of the three respective employees, whereupon each employee may tap his or her own individualized tag to be joined to the video conference. Should details of the conference change, an administrator who handed out and/or reprogrammed the actions associated with the tags may be enabled, by log-in to the cloud server, to reprogram the actions that the cloud server provides to the devices for the video conference call, such as the network linkage details to be used by the devices for the conference call, the time of the call, the number dialed for the call, or the like.

In yet another exemplary application, an action may be provided responsive to tapping a tag 850 to set up a game on one or more particular devices 810, 120, such as a multi-player game on multiple devices 810, 120, each of which must tap the same tag 850 or a corresponded one of a group of tags to join, and/or ask to join, the game.

Additionally, the tap of a tag may cause to be provided to the tapping device tourist information, and/or transportation information, for example. By way of non-limiting example, in transportation applications, such as for bus schedules, train schedules, or the like, an action provided to the device may include a hyperlink to allow itinerary changes to be made, and/or to automatically generate an email to a particular predetermined or selected contact that an itinerary change has been made.

The disclosure herein provides numerous novel and advantageous interactions. Such interactions include, by way of non-limiting example, interactions between a public reading device 810, 120 and an NFC tag 850 that refers the public reading device 810 to a cloud server 1306 to obtain one or more actions suitable for execution by the public reading device, as well as any desired or required security aspects related thereto, as well as native and non-native app components related thereto. Further, providing various tags that enable different capabilities that may be realized based on the actions to be provided from the cloud is also a unique aspect of the herein disclosed devices, systems, and methods. For example, Java@ Script may be embedded on the tag, to allow for greater functionality from the tag, such as in conjunction with actions provided by the cloud server, although such embodiments will likely entail the use of more expensive tags to accommodate the additional information required to be associated with the tag. Further, in such embodiments, the reprogramming of the tag aspects of the action, such as the Java Script in the example immediately above, would then require a private reading device in close proximity to the tag in order to reprogram that aspect of the action on the tag.

Additional aspects include the provision of suitably-identified and accessible private aspects of tags to cloud server(s) 912, 1306. Further novel aspects may include uploading action(s) associated with private identification(s) or authorization(s) to cloud server(s) 1306, and the ability to program or reprogram private actions at the cloud server, for example, using suitably-configured GUI(s) of the private device 810, 120. Further advantageous aspects include the receipt by a public reading device of a device action from the cloud, as well as the identification of public versus private users, and the tracking and/or monitoring thereof, for the tag owner at the cloud server.

Further advantages may include that actions may be selectable in the cloud server by authorized tag owner(s)/administrator(s) for association with and/or writing to particular tags, or actions may be generated on a private reading device, and uploaded to the cloud server upon synchronization of the private reading device to, for example, a laptop or desktop computer. Moreover, decisions as to which tags will receive certain actions may further be performed directly in the cloud server, or may be performed on the private reading device 810, 120, and may be made available to public reading devices only upon upload and/or synchronization of a tag list and/or a list of the allowed public reading devices to the cloud server. Yet further, in all such embodiments, and particularly those in which security clearance of an action is not immediately available, a public reading device may likewise queue a particular received action in the device, such as awaiting a particular trigger that is anticipated by the device to occur.

Additionally, the herein disclosed devices, systems, and methods allow for multiple, bi-lateral, or the like approvals or other authorizations of users and/or devices before the granting of access to actions to one or more devices. For example multiple, bi-lateral, or the like taps by different, authorized users wishing to join a particular "room" within a game may be necessary to grant the particular action of starting the game play to the multiple such users.

The disclosure thus includes, among others, devices, networks, systems, methods, and communicative links between near field communication (NFC) tags, devices, and one or more cloud servers, which may be servers on private, semi-private, and/or publicly accessible network(s), such as the Internet, for example. The disclosure includes devices, networks, systems, methods, and communicative links for accepting executable action(s) at a mobile device from a cloud server referenced by a near field communication (NFC) tag, including interacting with the NFC tag; receiving pointing or "direction" to the cloud server location in accordance with the interacting; interpreting and executing received or otherwise accessed directions; accessing identified cloud server location(s); receiving device-executable action(s) from the cloud server location(s); and interpreting and executing device-executable action. Action(s) may be or include instruction(s) or set(s) of instructions which, when executed on a device, cause the device to perform one or more tasks.

Further included in the disclosure are devices, networks, systems, methods, and communicative links for programming near field communications (NFC) tag(s) for associating NFC-capable device(s) with action(s) via cloud server(s), including private reading device(s) enabled to communicate with NFC tag(s) to thereby program a address(es) and/or other identifying information associated with the same or other cloud server(s) or networked resource(s) to the NFC tag; and graphical user interface(s) (GUI(s)) of the private reading device(s) configured to interact with application(s) of the private reading device associated with the action(s) and configured to uplink to the identified server(s) for subsequent processing.

Additionally included in the disclosure are devices, networks, systems, methods, and communicative links for interacting with near field communications (NFC) tag(s), including public reading device(s) configured for reading and/or otherwise interacting with the NFC tag(s); the public reading device(s) configured to receive and interpret data, including for example one or more cloud server locations or other address and/or identifying information associated with one or more cloud servers from the NFC tag(s); the public reading device obtaining and/or otherwise accessing, through processing of the interpreted data, at least one device-executable action from the cloud server location; and the public reading device executing the device-executable action(s).

Yet further included in the disclosure are devices, networks, systems, methods, and communicative links for interaction between at least first and second mobile devices and near field communications (NFC) tag(s), including cloud server(s) configured to receive via uplink(s) from the first mobile device information suitable for use in programming, by the first mobile device, of the NFC tag(s); the cloud server(s) receiving and interpreting request(s) for action responsive to the second mobile device(s) reading the NFC tag; and the cloud server transmitting, via a downlink, requested action to the second mobile device(s).

For example, the disclosure provides devices, each comprising at least one near field communication (NFC) system(s) operable for data communications with at least one other NFC-capable device; at least one wireless network communication system operable for wireless data communications with at least one computer network; and at least one processor configured to cause the NFC system to read from at least one other NFC-capable device a data set, to interpret the read data set, and, for each instruction, if any, associated with the interpreted data set that is executable by an application resident on the handheld communication device, cause the application to execute such locally-executable instruction; and for each reference, if any, comprised by the interpreted data set that is associated with a networked resource, cause the wireless network communication system to access the referenced networked resource.

Optionally, processor(s) of such devices may be configured, if the interpreted data set comprises no instruction that is executable by an application on the handheld communication device and no instruction that is referable to a networked application resource, to invoke an application configured for enabling a user of the device to associate an executable instruction with the interpreted data set.

In further aspects and embodiments, the disclosure provides and corresponding networks, systems, methods, media comprising coded instruction sets, and communicative links.

While the disclosure has been provided and illustrated in connection with specific, presently-preferred embodiments, many variations and modifications may be made without departing from the spirit and scope of the invention(s) disclosed herein. The disclosure and invention(s) are therefore not to be limited to the exact components or details of methodology or construction set forth above. Except to the extent necessary or inherent in the processes themselves, no particular order to steps or stages of methods or processes described in this disclosure, including the Figures, is intended or implied. In many cases, including for example the process(es) shown in Fig. 15A, the order of some or all process steps may be varied without changing the purpose, effect, or import of the methods described. The scope of the invention is to be defined solely by the appended claims, giving due consideration to the doctrine of equivalents and related doctrines.

## Claims

1. A wireless handheld communication device, comprising:
at least one near field communication (NFC) system operable for data communications with at least one other NFC-capable device;
at least one wireless network communication system operable for wireless data communications with at least one computer network; and
at least one processor configured to cause the NFC system to read from at least one other NFC-capable device a data set, to interpret the read data set, and
for each instruction, if any, associated with the interpreted data set that is executable by an application resident on the handheld communication device, cause the application to execute such locally-executable instruction; and
for each reference, if any, comprised by the interpreted data set that is associated with a networked resource, cause the wireless network communication system to access the referenced networked resource.

2. The device of claim 1, wherein the processor is configured, if the interpreted data set comprises no instruction that is executable by an application on the handheld communication device and no reference associated with a networked resource, to invoke an application configured for enabling a user of the device to associate an executable instruction with the interpreted data set.

3. The device of claim 1 or claim 2, wherein the processor is further configured, if the interpreted data set comprises a write authorization associable with the handheld device, to invoke an application configured for enabling the device to write data to the at least one other NFC-capable device a data set.

4. The device of any preceding claim, wherein the at least one other NFC-capable device comprises at least one passive NFC device.

5. The device of any preceding claim, wherein at least a portion of the read data set is a secure data set readable by the device upon satisfaction of an authorization, and optionally wherein the secure data set is an encrypted data set.

6. The device of claim 5, wherein the secure data set comprises encrypted data readable using a private key accessible by the device.

7. The device of claim 5 or claim 6, wherein the secure data set comprises encrypted data readable using a private key accessible by the device, and the data readable using the private key comprises authorization for invoking an application configured for enabling the device to write data to the at least one other NFC-capable device a data set.

8. The device of any preceding claim, wherein the interpreted data set comprises at least one instruction, execution of which invokes an application configured to control at least one device control profile.

9. The device of claim 8, wherein the at least one device control profile comprises a user preference profile configured to control a wireless communication device or an environmental control system.

10. The device of any preceding claim, wherein the interpreted data set comprises at least one instruction, execution of which invokes a messaging application.

11. Non-transient media comprising machine-readable coded instructions configured to cause a processor of a wireless handheld communication device to:
read from memory associated with a passive NFC-capable device a data set,
to interpret the read data set; and
for each instruction, if any, associated with the interpreted data set that is executable by an application resident on the handheld communication device, cause the application to execute such locally-executable instruction; and
for each reference, if any, comprised by the interpreted data set that is associated with a networked resource, cause the wireless network communication system to access the referenced networked resource.

12. The media of claim 11, wherein the instructions are further configured to cause the processor, if the interpreted data set comprises no instruction that is executable by an application on the handheld communication device and no reference associated with a networked resource, to invoke an application configured for enabling a user of the device to associate an executable instruction with the interpreted data set.

13. The media of claim 11 or claim 12, wherein the instructions are further configured to cause the processor, if the interpreted data set comprises a write authorization associable with the handheld device, to invoke an application configured for enabling the device to write data to the at least one other NFC-capable device a data set.

14. The media of any of claims 11 to 13, wherein the instructions are further configured to cause the processor to satisfy an authorization process as a condition of interpreting the read data set, and optionally wherein satisfying the authorization process comprises decrypting the read data set, and further optionally wherein decrypting the read data set comprises using a private key accessible by the device.

15. The media of any of claims 11 to 14, wherein the instructions are further configured to cause the processor, if:
the secure data set comprises encrypted data readable using a private key accessible by the device, and
the data readable using the private key comprises authorization for invoking an application;
to write data to the at least one other NFC-capable device a data set.

16. The media of any of claims 11 to 15, wherein the interpreted data set comprises at least one instruction, execution of which invokes a messaging application.

17. The media of any of claims 11 to 16, wherein the interpreted data set comprises at least one instruction, execution of which invokes an application configured to control at least one device control profile.

18. The media of claim 17, wherein the at least one device control profile comprises a user preference profile configured to control a wireless communication device or an environmental control system.
